# EUROPEAN PATENT APPLICATION

(11) **EP 4 369 760 A1**
(43) Date of publication of application: **15.05.2024**
(21) Application number: 22852363.5
(22) Date of filing: 05.08.2022
(51) Int. Cl.: H04W 12/06, H04W 12/37

(54) **SECURE COMMUNICATION METHOD AND APPARATUS**

(30) Priority: 06.08.2021 CN 202110904250; 14.09.2021 CN 202111073980
(71) Applicant: Huawei Technologies Co., Ltd., Shenzhen, Guangdong 518129 (CN)
(72) Inventor: LI, He, Shenzhen, Guangdong 518129 (CN); WU, Rong, Shenzhen, Guangdong 518129 (CN)
(74) Representative: Pfenning, Meinig & Partner mbB
(86) International application number: PCT/CN2022/110663
(87) International publication number: WO 2023/011652

(57) **Abstract**

This application provides a secure communication method applicable to a scenario in which a terminal device accesses a network in a manner of non-seamless wireless local area network offloading NSWO, and the method includes: A unified data management entity receives indication information from an authentication server function entity; and the unified data management entity selects extensible authentication protocol-authentication and key agreement EAP-AKA' from at least two authentication manners based on the indication information, to perform authentication with the terminal device. According to the secure communication method and an apparatus provided in this application, the UDM is indicated to select an EAP-AKA' authentication method, so that an authentication procedure between UE and a 5GC in the NSWO scenario can be improved.

## Description

This application claims priority to Chinese Patent Application No. 202110904250.8, filed with the China National Intellectual Property Administration on August 6, 2021 and entitled "SECURE COMMUNICATION METHOD AND APPARATUS", and to Chinese Patent Application No. 202111073980.4, filed with the China National Intellectual Property Administration on September 14, 2021 and entitled "SECURE COMMUNICATION METHOD AND APPARATUS", which are incorporated herein by reference in their entireties.

### TECHNICAL FIELD

This application relates to the communication field, and more specifically, to a secure communication method and an apparatus.

### BACKGROUND

User equipment (user equipment, UE) may access a network in a manner of non-seamless wireless local area network offloading (non-seamless wireless local area network offload, NSWO), so that the UE accesses the network by using a non-3rd generation partnership project (non-3rd generation partnership project, non-3GPP) technology. Currently, this manner is limited to being applied only to a 4th generation (4th generation, 4G) system. Therefore, how to extend an application scope of the NSWO access manner becomes a problem to be urgently resolved.

### SUMMARY

This application provides a secure communication method and an apparatus, to apply an NSWO scenario to a 5th generation (5th generation, 5G) system, extend an application scope of an NSWO access manner, and indicate a UDM to select an EAP-AKA' authentication method, so that an authentication procedure between UE and a 5th generation core network (5th generation core, 5GC) in the NSWO scenario can be improved.

According to a first aspect, a secure communication method applicable to a scenario in which a terminal device accesses a network in a manner of non-seamless wireless local area network offloading NSWO is provided, including: A unified data management entity receives indication information from an authentication server function entity; and the unified data management entity selects extensible authentication protocol-authentication and key agreement EAP-AKA' from at least two authentication manners based on the indication information, to perform authentication with the terminal device.

In the foregoing solution, the NSWO scenario is applied to a 5G system, and an application scope of an NSWO access manner is extended. In addition, the UDM is indicated to select an EAP-AKA' authentication method, so that an authentication procedure between UE and a 5GC in the NSWO scenario can be improved. In addition, in the NSWO scenario, when accessing the 5GC by using a non-3GPP access technology, the terminal device may not pass through an AMF. This reduces load of the AMF and reduces overheads of deploying an architecture in which the UE accesses the 5GC by using the non-3GPP technology.

With reference to the first aspect, in some implementations of the first aspect, the indication information is a subscription concealed identifier SUCI in a network access identifier NAI format, or a field in a subscription concealed identifier SUCI.

With reference to the first aspect, in some implementations of the first aspect, the indication information includes any one or more of the following: an identifier of the authentication server function entity, an identifier of a network in which the terminal device is located, access technology type indication information, or access method indication information, where access type indication information indicates an access network type, and the access method indication information indicates a feature of an access technology used by the terminal device.

With reference to the first aspect, in some implementations of the first aspect, the method further includes: The unified data management entity stores information indicating that the terminal device accesses the network in the manner of the non-seamless wireless local area network offloading NSWO; or the unified data management entity stores information indicating that the terminal device accesses the network in the NSWO manner, and the identifier of the authentication server function entity.

In the foregoing solution, when recording an authentication success state, the UDM may record only the state in which the authentication succeeds in the NSWO, and does not record the ID of the authentication server function entity. This is easy to maintain, and a small quantity of network elements need to be changed, thereby facilitating quick commercial use. Alternatively, an authentication success state in the NSWO may be bound to the ID of the authentication server function entity, so that an entry recorded by the UDM is clearer.

With reference to the first aspect, in some implementations of the first aspect, the information indicating that the terminal device accesses the network in the manner of the non-seamless wireless local area network offloading NSWO is used in an extensible authentication protocol EAP re-authentication procedure.

According to a second aspect, a secure communication method is provided, including: A terminal device receives a message from a wireless access point; the terminal device generates indication information based on the message, where the indication information indicates that the terminal device is in a non-seamless wireless local area network offloading NSWO scenario; and the terminal device sends the indication information.

In the foregoing solution, the NSWO scenario is applied to a 5G system, and an application scope of an NSWO access manner is extended. In addition, a UDM is indicated to select an EAP-AKA' authentication method, so that an authentication procedure between UE and a 5GC in the NSWO scenario can be improved. In addition, in the NSWO scenario, when accessing the 5GC by using a non-3GPP access technology, the terminal device may not pass through an AMF. This reduces load of the AMF and reduces overheads of deploying an architecture in which the UE accesses the 5GC by using the non-3GPP technology.

With reference to the second aspect, in some implementations of the second aspect, the method further includes: The terminal device determines, based on a first message 01, to access a network in the NSWO manner.

With reference to the second aspect, in some implementations of the second aspect, first indication information 01 includes a subscription concealed identifier (subscription concealed identifier, SUCI), where the SUCI is a field in a network access identifier (network access identifier, NAI) format, or the SUCI is a field in an NAI format that is generated by the terminal device based on an international mobile subscriber identity (International Mobile Subscriber Identity, IMSI)-type subscription permanent identifier SUPI, or the SUCI is a field in an NAI format that is generated by the terminal device based on an IMSI-type SUPI; and, the SUCI includes a first field, and the first field indicates to select EAP-AKA' to perform authentication with the terminal device.

With reference to the second aspect, in some implementations of the second aspect, the method further includes: The terminal device generates a master session key, where the master session key is a root key used for generating a key used for communication between the terminal device and a network, and the network is a network accessed by the terminal device in the NSWO manner.

In the foregoing solution, after the authentication succeeds, the root key used for generating the key used for communication between the terminal device and the network is generated, to facilitate subsequent secure communication between the terminal device and the network in the NSWO scenario. This further improves an authentication and key distribution procedure in the NSWO scenario.

With reference to the second aspect, in some implementations of the second aspect, that the terminal device sends the indication information includes:

The terminal device sends the indication information to a unified data management entity, an authentication server function entity, or the wireless access point.

According to a third aspect, a secure communication method is provided, including: An authentication server function entity receives a message from a wireless access point; the authentication server function entity generates indication information based on the message, where the indication information indicates a unified data management entity to select extensible authentication protocol-authentication and key agreement EAP-AKA' to perform authentication with a terminal device; and the authentication server function entity sends the indication information to the unified data management entity.

In the foregoing solution, an NSWO scenario is applied to a 5G system, and an application scope of an NSWO access manner is extended. In addition, the UDM is indicated to select an EAP-AKA' authentication method, so that an authentication procedure between UE and a 5GC in the NSWO scenario can be improved. In addition, in the NSWO scenario, when accessing the 5GC by using a non-3GPP access technology, the terminal device may not pass through an AMF. This reduces load of the AMF and reduces overheads of deploying an architecture in which the UE accesses the 5GC by using the non-3GPP technology.

With reference to the third aspect, in some implementations of the third aspect, the indication information includes any one or more of the following: an identifier of the authentication server function entity, an identifier of a network in which the terminal device is located, access technology type indication information, or access method indication information, where access type indication information indicates an access network type, and the access method indication information indicates a feature of an access technology used by the terminal device.

With reference to the third aspect, in some implementations of the third aspect, the method further includes: The authentication server function entity determines, based on the message, that the terminal device accesses the network in the NSWO manner.

With reference to the third aspect, in some implementations of the third aspect, the method further includes: The authentication server function entity generates a master session key, where the master session key is used for generating a key used for communication between the terminal device and the network; and the authentication server function entity sends the master session key to the wireless access point.

In the foregoing solution, when recording an authentication success state, the UDM may record only the state in which the authentication succeeds in NSWO, and does not record the ID of the authentication server function entity. This is easy to maintain, and a small quantity of network elements need to be changed, thereby facilitating quick commercial use. Alternatively, an authentication success state in NSWO may be bound to the ID of the authentication server function entity, so that an entry recorded by the UDM is clearer.

According to a fourth aspect, a secure communication apparatus is provided, including: a transceiver module, configured to receive a message from a wireless access point; and a processing module, configured to generate indication information based on the message, where the indication information indicates that the terminal device is in a non-seamless wireless local area network offloading NSWO scenario, and the transceiver module is further configured to send the indication information.

In the foregoing solution, the NSWO scenario is applied to a 5G system, and an application scope of an NSWO access manner is extended. In addition, a UDM is indicated to select an EAP-AKA' authentication method, so that an authentication procedure between UE and a 5GC in the NSWO scenario can be improved. In addition, in the NSWO scenario, when accessing the 5GC by using a non-3GPP access technology, the terminal device may not pass through an AMF. This reduces load of the AMF and reduces overheads of deploying an architecture in which the UE accesses the 5GC by using the non-3GPP technology.

With reference to the fourth aspect, in some implementations of the fourth aspect, the processing module is further configured to: determine, based on the message, to access a network in the NSWO manner.

With reference to the fourth aspect, in some implementations of the fourth aspect, the indication information is a subscription concealed identifier SUCI in a network access identifier NAI format, or a field in a subscription concealed identifier SUCI.

With reference to the fourth aspect, in some implementations of the fourth aspect, the processing module is further configured to generate a master session key, where the master session key is used for generating a key used for communication between the terminal device and a network, and the network is a network accessed by the terminal device in the NSWO manner.

With reference to the fourth aspect, in some implementations of the fourth aspect, the transceiver module is further specifically configured to: send the indication information to a unified data management entity, an authentication server function entity, or the wireless access point.

According to a fifth aspect, a secure communication apparatus applicable to a scenario in which a terminal device accesses a network in a manner of non-seamless wireless local area network offloading NSWO is provided, including: a transceiver module, configured to receive indication information from an authentication server function entity; and a processing module, configured to: select extensible authentication protocol-authentication and key agreement EAP-AKA' from at least two authentication manners based on the indication information, to perform authentication with the terminal device.

In the foregoing solution, the NSWO scenario is applied to a 5G system, and an application scope of an NSWO access manner is extended. In addition, a UDM is indicated to select an EAP-AKA' authentication method, so that an authentication procedure between UE and a 5GC in the NSWO scenario can be improved. In addition, in the NSWO scenario, when accessing the 5GC by using a non-3GPP access technology, the terminal device may not pass through an AMF. This reduces load of the AMF and reduces overheads of deploying an architecture in which the UE accesses the 5GC by using the non-3GPP technology.

With reference to the fifth aspect, in some implementations of the fifth aspect, the indication information is a subscription concealed identifier SUCI in a network access identifier NAI format, or a field in a subscription concealed identifier SUCI.

With reference to the fifth aspect, in some implementations of the fifth aspect, the indication information includes any one or more of the following: an identifier of the authentication server function entity, an identifier of a network in which the terminal device is located, access technology type indication information, or access method indication information, where access type indication information indicates an access network type, and the access method indication information indicates a feature of an access technology used by the terminal device.

With reference to the fifth aspect, in some implementations of the fifth aspect, the processing module is further configured to store information indicating that the terminal device accesses the network in the manner of the non-seamless wireless local area network offloading NSWO; or the processing module is further configured to: store information indicating that the terminal device accesses the network in the NSWO manner, and the identifier of the authentication server function entity.

With reference to the fifth aspect, in some implementations of the fifth aspect, the information indicating that the terminal device accesses the network in the manner of the non-seamless wireless local area network offloading NSWO is used in an extensible authentication protocol EAP re-authentication procedure.

According to a sixth aspect, a secure communication apparatus is provided, including: a transceiver module, configured to receive a message from a wireless access point; and a processing module, configured to generate indication information based on the message, where the indication information indicates a unified data management entity to select extensible authentication protocol-authentication and key agreement EAP-AKA' to perform authentication with a terminal device, and the transceiver module is further configured to send the indication information to the unified data management entity.

In the foregoing solution, an NSWO scenario is applied to a 5G system, and an application scope of an NSWO access manner is extended. In addition, the UDM is indicated to select an EAP-AKA' authentication method, so that an authentication procedure between UE and a 5GC in the NSWO scenario can be improved. In addition, in the NSWO scenario, when accessing the 5GC by using a non-3GPP access technology, the terminal device may not pass through an AMF. This reduces load of the AMF and reduces overheads of deploying an architecture in which the UE accesses the 5GC by using the non-3GPP technology.

With reference to the sixth aspect, in some implementations of the sixth aspect, the indication information includes any one or more of the following: an identifier of an authentication server function entity, an identifier of a network in which the terminal device is located, access technology type indication information, or access method indication information, where access type indication information indicates an access network type, and the access method indication information indicates a feature of an access technology used by the terminal device.

With reference to the sixth aspect, in some implementations of the sixth aspect, the processing module is further configured to: determine, based on the message, that the terminal device accesses the network in the NSWO manner.

With reference to the sixth aspect, in some implementations of the sixth aspect, the processing module is further configured to generate a master session key, where the master session key is used for generating a key used for communication between the terminal device and the network; and the transceiver module is further configured to send the master session key to the wireless access point.

According to a seventh aspect, a communication apparatus is provided, including a processor and a memory, where the memory is configured to store a computer program, and the processor is configured to: execute the computer program stored in the memory, so that the communication apparatus performs the communication method according to any one of the first aspect to the third aspect.

According to an eighth aspect, a computer-readable storage medium is provided, where the computer-readable storage medium stores a computer program, and when the computer program is run on a computer, the computer is enabled to perform the communication method according to any one of the first aspect to the third aspect.

According to a ninth aspect, a chip system is provided, including a processor, configured to: invoke a computer program from a memory and run the computer program, so that a communication device in which the chip system is installed performs the communication method according to any one of the first aspect to the third aspect.

According to a tenth aspect, a secure communication system is provided, including: a terminal device, configured to receive a message 01 from a wireless access point; further configured to generate indication information 01 based on the message, where the indication information 01 indicates that the terminal device is in a non-seamless wireless local area network offloading NSWO scenario; and further configured to send the indication information 01 to an authentication server function entity; and the authentication server function entity is configured to receive the indication information 01; further configured to send indication information 02 to a unified data management entity, where the indication information 02 indicates to select EAP-AKA' to perform authentication with the terminal device; and the unified data management entity is configured to: select, based on the indication information 02, the EAP-AKA' from at least two authentication manners to perform authentication with the terminal device.

According to an eleventh aspect, a secure communication system is provided, including: an authentication server function entity, configured to receive a message 02; and further configured to generate indication information 02 based on the message 02, where the indication information 02 indicates a unified data management entity to select extensible authentication protocol-authentication and key agreement EAP-AKA' to perform authentication with a terminal device; and further configured to send the indication information 02 to the unified data management entity; the unified data management entity is configured to: select, based on the indication information 02, EAP-AKA' from at least two authentication manners to perform authentication with the terminal device.

### BRIEF DESCRIPTION OF DRAWINGS

FIG. 1 is a schematic diagram of a non-3GPP access architecture in 4G;
FIG. 2 shows a current 5G network architecture;
FIG. 3 shows a structure of an SUCI;
FIG. 4 is a schematic interaction diagram of a secure communication method 100 according to this application;
FIG. 5 is a schematic interaction diagram of a secure communication method 200 according to this application;
FIG. 6 is a schematic interaction diagram of a secure communication method 300 according to this application;
FIG. 7A and FIG. 7B are a schematic interaction diagram of a secure communication method 400 according to this application;
FIG. 8 shows a key architecture for generating an MSK according to this application;
FIG. 9A and FIG. 9B are a schematic interaction diagram of a secure communication method 500 according to this application;
FIG. 10A and FIG. 10B are a schematic interaction diagram of a secure communication method 600 according to this application;
FIG. 11A and FIG. 11B are a schematic interaction diagram of a secure communication method 700 according to this application;
FIG. 12 is a schematic block diagram of a communication apparatus for secure communication according to an embodiment of this application; and
FIG. 13 is a schematic diagram of a secure communication apparatus 20 according to an embodiment of this application.

### DESCRIPTION OF EMBODIMENTS

The following describes technical solutions of this application with reference to accompanying drawings.

The technical solutions provided in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunication system, UMTS), a worldwide interoperability for microwave access (worldwide interoperability for microwave access, WiMAX) communication system, a 5th generation (5th generation, 5G) system, a new radio (new radio, NR) system, or a future 3GPP System.

Usually, a conventional communication system supports a limited quantity of connections, and the connections are easy to implement. However, as communication technologies develop, a mobile communication system not only supports conventional communication, but also supports, for example, device-to-device (device to device, D2D) communication, machine-to-machine (machine to machine, M2M) communication, machine type communication (machine type communication, MTC), and vehicle-to-everything (vehicle to everything, V2X) communication (which may also be referred to as Internet of Vehicles communication) such as vehicle-to-vehicle (vehicle to vehicle, V2V) communication (which may also be referred to as vehicle-to-vehicle communication), vehicle-to-infrastructure (vehicle to infrastructure, V2I) communication (which may also be referred to as vehicle-to-infrastructure communication), vehicle-to-pedestrian (vehicle to pedestrian, V2P) communication (which may also be referred to as vehicle-to-person communication), and vehicle-to-network (vehicle to network, V2N) communication (which may also be referred to as vehicle-to-network communication).

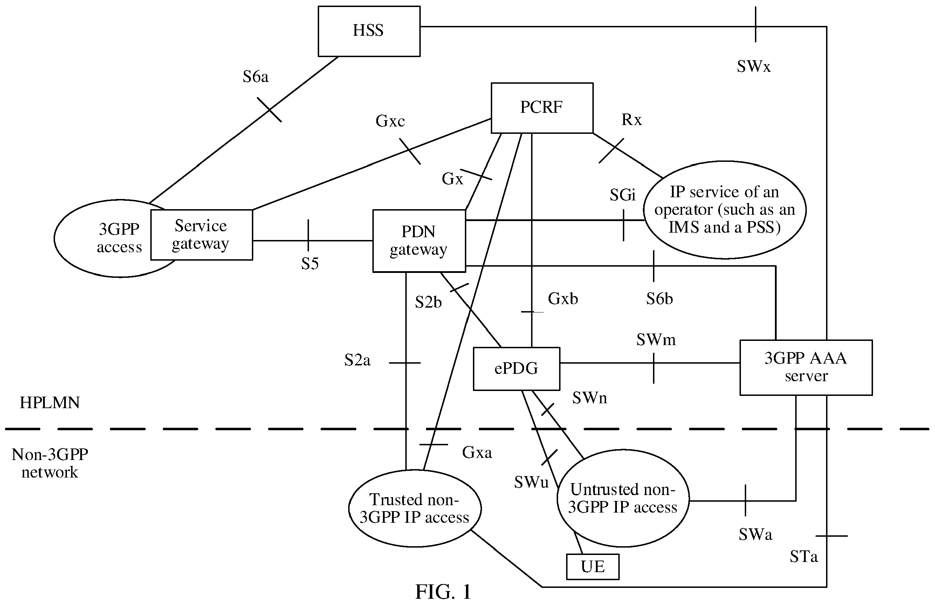

FIG. 1 is a schematic diagram of a non-3GPP access architecture in 4G. The following separately describes network elements that may be used in embodiments of this application with reference to FIG. 1.

Non-3GPP access means that UE accesses a carrier network by using a non-3GPP access technology and uses the carrier network resources. The non-3GPP access technologies include access technologies such as WLAN, CDMA, and the like.
1. User equipment (user equipment, UE): The user equipment may be referred to as a terminal device, a terminal, an access terminal, a subscriber unit, a subscriber station, a mobile station, a remote station, a remote terminal, a mobile device, a user terminal, a wireless communication device, a user proxy, or a user apparatus. The UE may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device or another processing device connected to a wireless modem, a vehicle-mounted device, a wearable device, a terminal device in a future 5G network, a terminal device in a future evolved public land mobile communication network (public land mobile network, PLMN), a terminal device of a non-terrestrial network (non-terrestrial network, NTN), or the like; or may be an end device, a logical entity, an intelligent device, a terminal device such as a mobile phone or a smart terminal, a communication device such as a server, a gateway, a base station, or a controller, or an internet of things (internet of things, IoT) device such as a sensor, an electricity meter, or a water meter. Alternatively, the UE may be an uncrewed aerial vehicle (uncrewed aerial vehicle or uncrewed aerial vehicle, UAV) with a communication function. This is not limited in embodiments of this application.
2. Home subscriber server (home subscriber server, HSS): The home subscriber server is a server used for storing subscription information of a user in an evolved packet system (evolved packet system, EPS), and is mainly responsible for managing subscription data of the user and location information of a mobile user.
3. Policy and charging rules function unit (policy and charging rules function, PCRF): The policy and charging rules function unit is a policy decision point for policy and charging control of a service data flow and an internet protocol (internet protocol, IP) bearer resource, and may select and provide an available policy and charging control decision for a policy and charging enforcement function unit.
4. Public data network (public data network, PDN) gateway: The public data network gateway provides functions such as subscriber session management and bearer control, data forwarding, IP address allocation, and non-3GPP subscriber access. The public data network gateway is an anchor of a public data network PDN for 3GPP access and non-3GPP access.
5. Authentication, authorization, accounting (authentication, authorization, accounting, AAA) server: The authentication, authorization, accounting server is a server program that can process user access requests and provides authentication, authorization, and accounting services. The authentication, authorization, accounting server mainly aims to manage user access to a network server and provide services for authorized users. The AAA server usually works with network access control, a gateway server, a database, and a user information directory.
6. Evolved packet data gateway (evolved packet data gateway, ePDG)
7. IP multimedia system (IP multimedia subsystem, IMS): The IP multimedia system is a new multimedia service form, and can meet the requirements of end users for more innovative and diversified multimedia services.

It can be learned from FIG. 1 that, when UE in a 4G system accesses a network by using a non-3GPP manner, the UE passes through network elements such as an HSS and an AAA server, and does not pass through a core network element such as a mobility management entity (mobility management entity, MME). For example, when the UE accesses the network in a non-seamless WLAN offloading (non-seamless WLAN offload, NSWO) mode, the UE may access the network through a WLAN access point (Wi-Fi AP) without passing through the MME.

In a 5G network, it has been standardized that the UE can access a 5G core network by using a non-3GPP access technology. However, in a standard protocol of the 5G network, application of the NSWO access manner is not considered. To be specific, a scenario in which the UE does not access the 5GC by using an access and mobility management function network element (access and mobility management function, AMF) is not considered.

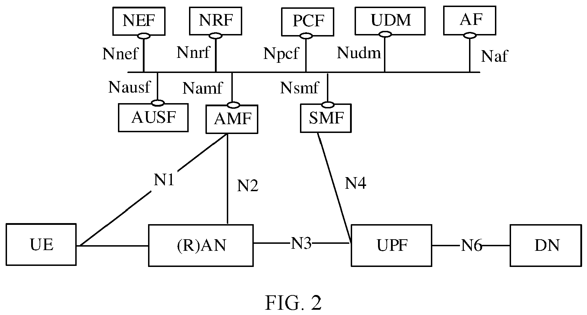

FIG. 2 shows a current 5G network architecture. The following separately describes network elements that may be used in embodiments of this application with reference to FIG. 2.
1. UE: For details, refer to descriptions corresponding to FIG. 1.
2. Access network (access network, AN): The access network is used for providing a network access function for an authorized user in a specific area, and can use transmission tunnels with different quality based on user levels, service requirements, and the like. Different access networks may use different access technologies. Currently, there are two types of radio access technologies: a 3GPP access technology (for example, a radio access technology used in a 3G, 4G, or 5G system and a future 3GPP radio access technology) and a non-3rd generation partnership project (non-3GPP) access technology. The 3GPP access technology is an access technology that complies with a 3GPP standard specification. An access network using the 3GPP access technology is referred to as a radio access network (radio access network, RAN), and an access network device in the 5G system is referred to as a next-generation NodeB (next generation Node Base station, gNB). The non-3GPP access technology is an access technology that does not comply with the 3GPP standard specification, for example, an air interface technology represented by an access point (access point, AP) in Wi-Fi.

An access network that implements a network access function based on a wireless communication technology may be referred to as a radio access network (radio access network, RAN). The radio access network can manage radio resources, provide an access service for a terminal, and further complete forwarding of a control signal and user data between the terminal and a core network.

The radio access network may be, for example, a base station (NodeB), an evolved base station (evolved NodeB, eNB or eNodeB), a base station (gNB) in a 5G mobile communication system, a base station in a future mobile communication system, or an AP in a Wi-Fi system, or may be a radio controller in a cloud radio access network (cloud radio access network, CRAN) scenario, or the access network device may be a relay station, an access point, a vehicle-mounted device, a wearable device, a network device in a future 5G network, a network device in a future evolved PLMN network, or the like. A specific technology and a specific device form that are used by a radio access network device are not limited in embodiments of this application.
3. Access and mobility management function (access and mobility management function, AMF) entity: The access and mobility management function entity is mainly used for mobility management, access management, and the like, and may be used for implementing a function other than session management in functions of a mobility management entity (mobility management entity, MME), for example, a function of lawful interception or access authorization (or authentication).
4. Authentication server function (authentication server function, AUSF) entity: The authentication server function entity is mainly used for user authentication and the like.
5. Unified data management (unified data management, UDM) entity: The unified data management entity is used for user identifier processing, access authentication, registration, mobility management, or the like.

In the network architecture shown in FIG. 2, an N1 interface is a reference point between a terminal and an AMF entity; an N2 interface is a reference point between an AN and the AMF entity, and is used for sending a non-access stratum (non-access stratum, NAS) message and the like; an N3 interface is a reference point between a (R)AN and a user plane function (user plane function, UPF) entity, and is used for transmitting user plane data and the like; an N4 interface is a reference point between a session management function (session management function, SMF) entity and the UPF entity, and is used for transmitting information such as tunnel identification information, data buffer indication information, and a downlink data notification message that identify an N3 connection; and an N6 interface is a reference point between the UPF entity and a data network (DN), and is used for transmitting user plane data and the like.

It should be understood that, the network architecture shown in FIG. 2 may be applied to embodiments of this application. In addition, a network architecture applicable to embodiments of this application is not limited thereto. Any network architecture that can implement functions of the foregoing network elements is applicable to embodiments of this application.

It should be further understood that the AMF entity, the SMF entity, the UPF entity, a network exposure function (network exposure function, NEF), the AUSF entity, a network repository function (network function (NF) repository function, NRF) entity, a policy control function (policy control function, PCF) entity, and the UDM entity shown in FIG. 2 may be understood as network elements for implementing different functions in a core network, for example, may be combined into a network slice as required. These core network elements may be independent devices, or may be integrated into a same device to implement different functions. This is not limited in this application. It should be noted that the "network element" may also be referred to as an entity, a device, an apparatus, a module, or the like. This is not particularly limited in this application.

It should be further understood that the foregoing names are only used to distinguish between different functions, and do not mean that these network elements are independent physical devices. Specific forms of the foregoing network elements are not limited in this application. For example, the network elements may be integrated into a same physical device, or may be different physical devices. In addition, the foregoing names are only used to distinguish between different functions, and shall not constitute any limitation on this application. This application does not exclude a possibility of using another name in a 5G network and another future network. For example, in a 6G network, some or all of the foregoing network elements may still use terms in 5G, or may use other names. This is uniformly described herein, and details are not described below.

It should be further understood that the network elements in FIG. 2 communicate with each other based on a service-based interface. For example, the network elements exchange information or invoke a service through the service-based interface. Names of the interfaces between the network elements in FIG. 2 are merely examples, and the interfaces may have other names during specific implementation. This is not specifically limited in this application. In addition, names of the messages (or the signaling) transmitted between the foregoing network elements are merely examples, and do not constitute any limitation on functions of the messages.

In the network architecture, the RAN supports two access technologies: the 3GPP access technology and the non-3GPP access technology. It can be learned from FIG. 2 that if the UE accesses a 5GC by using the non-3GPP technology, the UE needs to pass through the AMF. Actually, in a background of 3GPP and non-3GPP convergence, when the UE accesses the 5GC by using the 3GPP and non-3GPP access technologies and performs authentication, the UE needs to pass through the AMF. In this case, if the UE can complete user plane data exchange by using non-3GPP access, that the UE needs to access the 5GC causes heavy load on AMF processing, signaling exchange, and the like. This affects network communication efficiency. In addition, a network architecture in which the UE accesses the 5GC by using the non-3GPP technology has not been actually deployed, and costs required for deploying the network architecture are very high.

In an NSWO mode in a 4G system, the UE may access a network through a WLAN access point instead of a core network element (for example, the AMF), an architecture in which the UE accesses the network in the NSWO mode has been basically deployed, and currently, there is no solution in which the UE accesses the 5GC in the NSWO mode. Therefore, this application proposes a secure communication method and an apparatus, so that the UE can access the 5GC in the NSWO mode without passing through the AMF, to reduce load of the AMF, improve the network communication efficiency, and reduce the costs of deploying the network architecture. When the UE accesses the 5GC in the NSWO mode, because a UDM in the 5G system supports two authentication methods: EAP-AKA' and 5G-AKA, but only the EAP-AKA' can be used in an NSWO scenario, how the UDM selects an authentication method becomes a problem to be resolved.

To better understand the technical solutions in embodiments of this application, the following describes some related concepts.

A subscription permanent identifier (subscription permanent identifier, SUPI) includes an SUPI type (type) and an SUPI value. There are four SUPI types: IMSI, NSI (network specific identifier), a global line identifier (GLI), and a global cable identifier (GCI), and there are two formats of the SUPI value: IMSI and NAI. The NAI format is a general format, and is expressed in a form of username@example.com.

To prevent the SUPI of a user from being exposed on an air interface, a result is obtained by calculating a part of the SUPI other than the SUPI type. The result is a part of a subscription concealed identifier (subscription concealed identifier, SUCI).

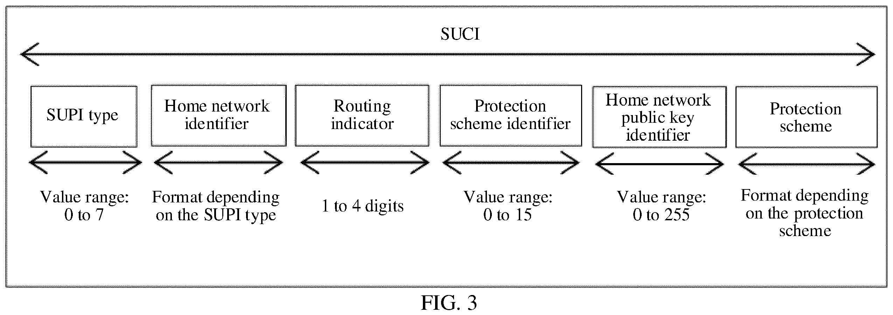

FIG. 3 shows a structure of an SUCI. As shown in FIG. 3, the SUCI mainly includes the following content:

SUPI type: 0 indicates IMSI, 1 indicates NSI, 2 indicates GLI, 3 indicates GCI, and 4 to 7 are not defined.

A home network identifier (home network identifier) identifies a home network of UE.

When the SUPI type is the IMSI, the home network identifier is mobile country code (mobile country code, MCC) and mobile network code (mobile network code, MNC). When the SUPI type is the NSI, the home network identifier is a character string in a format of username@realm. If the SUPI type is the GCI, a format of the home network identifier is 5gc.mnc<MNC>.mcc<MCC>.3gppnetwork.org.

For ease of understanding embodiments of this application, the following describes some concepts in this application.
1. In this application, the UE may access a network in a 3GPP or non-3GPP manner, and when the UE accesses the network in the non-3GPP manner, the access manner specifically includes an NSWO access manner and a non-NSWO access manner.
2. Non-seamless WLAN offloading (non-seamless WLAN offload, NSWO) means that after performing an authentication procedure with a carrier network by using a credential of the carrier network, the UE directly sends data to an external network by using a local AP. In this access method, only the carrier needs to provide the credential and the corresponding authentication procedure, and network elements such as an AMF and an SMF do not need to create, for the UE, a context used by a 3GPP network of the UE. That is, the NSWO is a method for transferring user data without requiring a 3GPP system to provide a service for the UE after a UE identity is confirmed by using a 3GPP credential, for example, a method for the UE to access a Wi-Fi AP and transfer the user data without passing through a 3GPP core network.

It should be noted that a plurality of expressions such as "NSWO mode", "NSWO manner", "NSWO technology", "NSWO access", and "NSWO access manner" in this application all express the foregoing content.

It should be noted that the NSWO scenario in this application and the secure communication method in the NSWO scenario are not limited to be implemented in a 4G system, and are applicable to 5G, NR, and future 6G and 7G systems.

3. The non-NSWO manner is an access manner in which the UE accesses a 5G core network by using a non-3GPP access technology. In this access manner, the carrier needs to provide a credential and a corresponding authentication procedure, and the network elements such as the AMF and the SMF need to create, for the UE, the context used by the 3GPP network of the UE. The preceding is a standardized access procedure standardized in 3GPP Release 15.

It should be noted that a plurality of expressions such as "non-NSWO mode", "non-NSWO manner", "non-NSWO technology", "non-NSWO access", and "non-NSWO access manner" in this application all express the foregoing content.

4. In this application, a wireless access point (Wi-Fi AP) may also be referred to as a WLAN AP, and may be only an access node, or may be an access node including a control function. In a scenario in which the Wi-Fi AP transfers a message, embodiments of this application are also applicable to the following manners:
Manner 1: The Wi-Fi AP, as the access node, directly transfers the message to a receiver.
Manner 2: The Wi-Fi AP first transfers the message to an internal access controller (access controller, AC).
Manner 3: The Wi-Fi AP transfers the message to an external AC, and then the AC sends the message to a receiver.

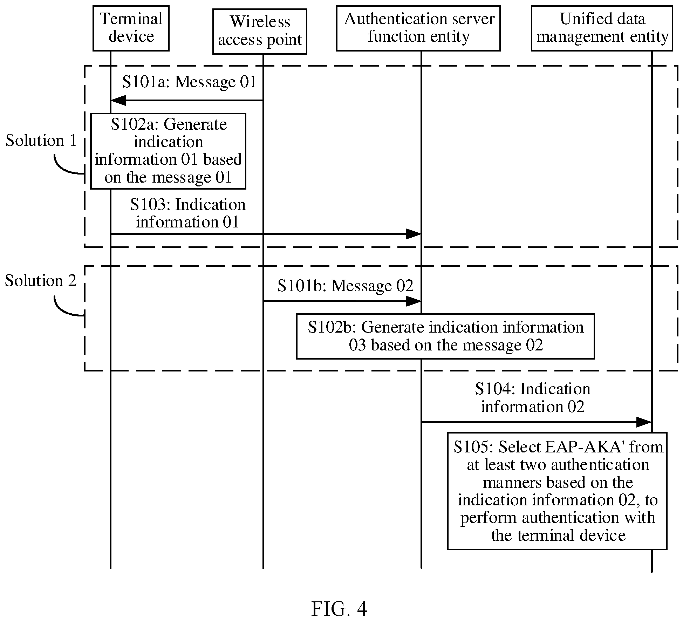

With reference to FIG. 4, the following describes in detail a secure communication method 100 provided in this application. FIG. 4 is a schematic interaction diagram of the method 100 according to this application. The method 100 may be specifically implemented by using two solutions.

### Solution 1:

S101a: A wireless access point sends a message 01 to a terminal device, and correspondingly, the terminal device receives the message 01 from the wireless access point.

It should be understood that the message 01 may be a message received from the wireless access point in a process of establishing a connection between the terminal device and the wireless access point. Specifically, for information exchange in the process of establishing the connection between the terminal device and the wireless access point, refer to related steps in the institute of electrical and electronics engineers (institute of electrical and electronics engineer, IEEE) 802.11. The terminal device may determine, based on the message 01, to access a network in an NSWO manner.

For example, for how the terminal device determines, based on the message 01, to access the network in the NSWO manner, refer to related content in S201.

S102a: The terminal device generates indication information 01 based on the message 01, where the indication information 01 indicates that the terminal device is in an NSWO scenario, or indicates a unified data management entity to select EAP-AKA' to perform authentication with the terminal device.

That the indication information 01 indicates a unified data management entity to select EAP-AKA' to perform authentication with the terminal device indicates that a receiver of the indication information 01 may learn, based on the indication information 01, that the unified data management entity needs to be indicated to select the EAP-AKA' to perform authentication with the terminal device. When the receiver is the unified data management entity, the unified data management entity determines, based on the indication information 01, to select the EAP-AKA' to perform authentication with the terminal device.

Specifically, the indication information 01 may be an SUCI, or may be indication information carried in an SUCI, or may be independent indication information. This is not limited in this application.

For example, the indication information 01 may be an SUCI in an NAI format.

It should be understood that the SUCI in the NAI format may be generated based on SUPIs of different types, for example, generated based on an SUPI of an IMSI type. Generally, the SUCI generated based on the SUPI of the IMSI type is in an IMSI format, but the SUCI in the NAI format generated based on the SUPI in the IMSI format is different. Therefore, the SUCI may implicitly indicate to use the EAP-AKA' authentication method. For a specific implementation, refer to S203 in the method 200.

For example, the indication information 01 may be carried in the SUCI, and the indication information 01 may be a field, a character string, or a number in the SUCI. A location of the indication information 01 in the SUCI is not limited in this application. For example, the indication information 01 may be a character string "NSWO", and indicates the UE to perform access in the NSWO manner. For a specific implementation, refer to S203 in the method 200.

For example, the indication information 01 may be independent indication information, and indicates the UE to access the network in the NSWO manner, or indicates to use the EAP-AKA' authentication method.

For descriptions of a case in which the indication information 01 indicates the unified data management entity to select the EAP-AKA' to perform authentication with the terminal device, refer to the foregoing descriptions.

That the indication information 01 indicates the UE to access the network in the NSWO manner indicates that the receiver of the indication information 01 may learn, based on the indication information 01, that the UE accesses the network in the NSWO manner. When the receiver is the unified data management entity, the unified data management entity determines, based on the indication information 01, to select the EAP-AKA' to perform authentication with the terminal device.

S103: That the terminal device sends the indication information 01 includes: The terminal device sends the indication information 01 to the wireless access point, an authentication server function entity, or the unified data management entity, and correspondingly, when the receiver is the wireless access point, the wireless access point receives the indication information 01 and forwards the indication information 01 to the authentication server function entity; or when the receiver is the authentication server function entity, the authentication server function entity receives the indication information 01 and forwards the indication information 01 to the unified data management entity; or when the receiver is the unified data management entity, the unified data management entity receives the indication information 01 from the terminal device.

S104: The authentication server function entity sends indication information 02 to the unified data management entity based on the indication information 01, and correspondingly, the unified data management entity receives the indication information 02 from the authentication server function entity.

It should be understood that content included in the indication information 02 herein may be the same as or different from that included in the indication information 01.

For example, the content included in the indication information 02 is the same as that included in the indication information 01. The authentication server function entity forwards the content in the indication information 01. For details, refer to related descriptions in the method 200.

For example, the content included in the indication information 02 is different from that included in the indication information 01. It may be understood that the indication information 02 further includes other indication information in addition to the indication information 01. On a basis of the indication information 01, the authentication server function entity further adds self-generated information. For ease of description, the information is referred to as indication information 03 below. For example, the authentication server function entity determines, based on a message source (where for example, the message is from a Wi-Fi AP) of the indication information 01, that the UE accesses the network by using the NSWO, to generate the indication information 03. Therefore, the indication information 02 includes the indication information 01 and the indication information 03.

The indication information 03 may indicate that the terminal device is in the non-seamless wireless local area network offloading NSWO scenario, and indicates the unified data management entity to select the extensible authentication protocol-authentication and key agreement EAP-AKA' to perform authentication with the terminal device. The indication information 03 may be carried in a service network name (service network name, SN name), or may be independent indication information. For details, refer to S306 in the method 300.

S105: The unified data management entity selects the extensible authentication protocol-authentication and key agreement EAP-AKA' from at least two authentication manners based on the indication information 02, to perform authentication with the terminal device.

It should be noted that when the terminal device performs authentication with the network by using the EAP-AKA', a core network element AMF does not need to be passed through.

In correspondence with the indication information 02 in S104, the unified data management entity selects, based on an indication of the indication information 02, the EAP-AKA' to perform authentication with the terminal device.

For example, if the content of the indication information 02 is the same as the content of the indication information 01, for details, refer to S209 in the method 200; or if the indication information 02 includes the indication information 01 and the indication information 03, for details, refer to descriptions corresponding to S209 in the method 200 and S309 in the method 300 (where for example, the UDM selects the EAP-AKA' based on the SUCI or indication information 05, and the SN name or indication information 06).

In this embodiment of this application, the NSWO scenario is applied to a 5G system, so that an application scope of the NSWO access manner is extended. In addition, the UDM is indicated to select the EAP-AKA' authentication method, so that an authentication procedure between the UE and a 5GC in the NSWO scenario can be improved. In addition, in the NSWO scenario, when accessing the 5GC by using a non-3GPP access technology, the terminal device may not pass through the AMF. This reduces load of the AMF and reduces overheads of deploying an architecture in which the UE accesses the 5GC by using the non-3GPP technology. Further, the SUCI or the indication information generated by the UE indicates the UDM to select the EAP-AKA' authentication method, so that the authentication procedure in the NSWO scenario is improved.

### Solution 2:

S101b: A wireless access point sends a message 02 to an authentication server function entity, and correspondingly, the authentication server function entity receives the message 02 from the wireless access point.

For example, the authentication server function entity may determine, based on a source or a message name of the message 02, that a terminal device accesses a network by using NSWO. For example, the authentication server function entity determines, based on a fact that the source of the message 02 is the wireless access point, that the terminal device accesses the network by using the NSWO, or determines, based on a fact that the message name of the message 02 is an EAP-response/identity (EAP response/identity) message, that the terminal device accesses the network by using the NSWO.

Optionally, the authentication server function entity may further determine, based on indication information in the message 02, that the terminal device accesses the network by using the NSWO. For example, the message 02 may further include indication information 01. For details about the indication information 01, refer to related descriptions in Solution 1.

S102b: The authentication server function entity generates indication information 03 based on the message 02.

For example, the indication information 03 generated by the authentication server function entity may indicate that the terminal device is in a non-seamless wireless local area network offloading NSWO scenario, or indicates a unified data management entity to select extensible authentication protocol-authentication and key agreement EAP-AKA' to perform authentication with the terminal device. The indication information 03 may be carried in an SN name, or may be independent indication information.

That the indication information 03 indicates a unified data management entity to select EAP-AKA' to perform authentication with the terminal device indicates that a receiver of the indication information 03 may learn, based on the indication information 03, that the unified data management entity needs to be indicated to select the EAP-AKA' to perform authentication with the terminal device. When the receiver is the unified data management entity, the unified data management entity determines, based on the indication information 03, to select the EAP-AKA' to perform authentication with the terminal device.

That the indication information 03 indicates that the terminal device is in the non-seamless wireless local area network offloading NSWO scenario (or indicates UE to access the network in an NSWO manner) indicates that the receiver of the indication information 03 may learn, based on the indication information 03, that the UE accesses the network in the NSWO manner. When the receiver is the unified data management entity, the unified data management entity determines, based on the indication information 03, to select the EAP-AKA' to perform authentication with the terminal device.

For example, the indication information 03 may include any one or more of the following: an identifier of the authentication server function entity, an identifier of a network in which the terminal device is located, access technology type indication information, or access method indication information, where access type indication information indicates an access network type, and the access method indication information indicates a feature of an access technology used by the terminal device.

It should be understood that the identifier of the network in which the terminal device is located herein may include identification information of a serving network and identification information of an access network.

For details, refer to S306 in the method 300.

S104: The authentication server function entity sends indication information 02 to the unified data management entity.

It should be understood that content included in the indication information 02 may be the same as or may not be completely the same as that included in the indication information 03.

In an example, the message 02 does not include the indication information 01, and the content included in the indication information 02 may be the same as the content included in the indication information 03.

In another example, the message 02 includes the indication information 01, and the indication information 02 may include the indication information 01 and the indication information 03.

S105: The unified data management entity selects the EAP-AKA' from at least two authentication manners based on the indication information 02, to perform authentication with the terminal device.

In correspondence with the indication information 02 in S104, the unified data management entity selects, based on an indication of the indication information 02, the EAP-AKA' to perform authentication with the terminal device.

For example, if the content of the indication information 02 is the same as the content of the indication information 03, for details, refer to S309 in the method 300; or if the indication information 02 includes the indication information 01 and the indication information 03, for details, refer to descriptions corresponding to S209 in the method 200 and S309 in the method 300 (where for example, the UDM selects the EAP-AKA' based on an SUCI or indication information 05, and the SN name or indication information 06).

In this embodiment of this application, the NSWO scenario is applied to a 5G system, so that an application scope of the NSWO access manner is extended. In addition, the UDM is indicated to select an EAP-AKA' authentication method, so that an authentication procedure between the UE and a 5GC in the NSWO scenario can be improved. In addition, in the NSWO scenario, when accessing the 5GC by using a non-3GPP access technology, the terminal device may not pass through an AMF. This reduces load of the AMF and reduces overheads of deploying an architecture in which the UE accesses the 5GC by using the non-3GPP technology.

Optionally, the method 100 further includes the following step:

The unified data management entity stores information indicating that the terminal device accesses the network in the NSWO manner. For details, refer to Manner 1 in S216 or Manner 1 in S416.

Alternatively, the unified data management entity stores information indicating that the terminal device accesses the network in the NSWO manner, and the identifier of the authentication server function entity. For details, refer to Manner 2 in S216 or Manner 2 in S416.

In this embodiment of this application, when recording an authentication success state, the UDM may record only the state in which the authentication succeeds in the NSWO, and does not record the ID of the authentication server function entity. This is easy to maintain, and a small quantity of network elements need to be changed, thereby facilitating quick commercial use. Alternatively, an authentication success state in the NSWO may be bound to the ID of the authentication server function entity, so that an entry recorded by the UDM is clearer.

Optionally, the method 100 further includes the following steps:

The authentication server function entity generates a master session key, and correspondingly, the terminal device generates the same master session key, where the master session key is a root key used for generating a key used for communication between the terminal device and the network, and the network is a network accessed by the terminal device in the NSWO manner.

The authentication server function entity sends the master session key to the wireless access point, and correspondingly, the wireless access point receives the master session key from the authentication server function entity.

For details about how to generate the master session key, refer to S418 in the method 400.

In this embodiment of this application, after the authentication succeeds, the root key used for generating the key used for communication between the terminal device and the network is generated, to facilitate subsequent secure communication between the terminal device and the network in the NSWO scenario. This further improves an authentication and key distribution procedure in the NSWO scenario.

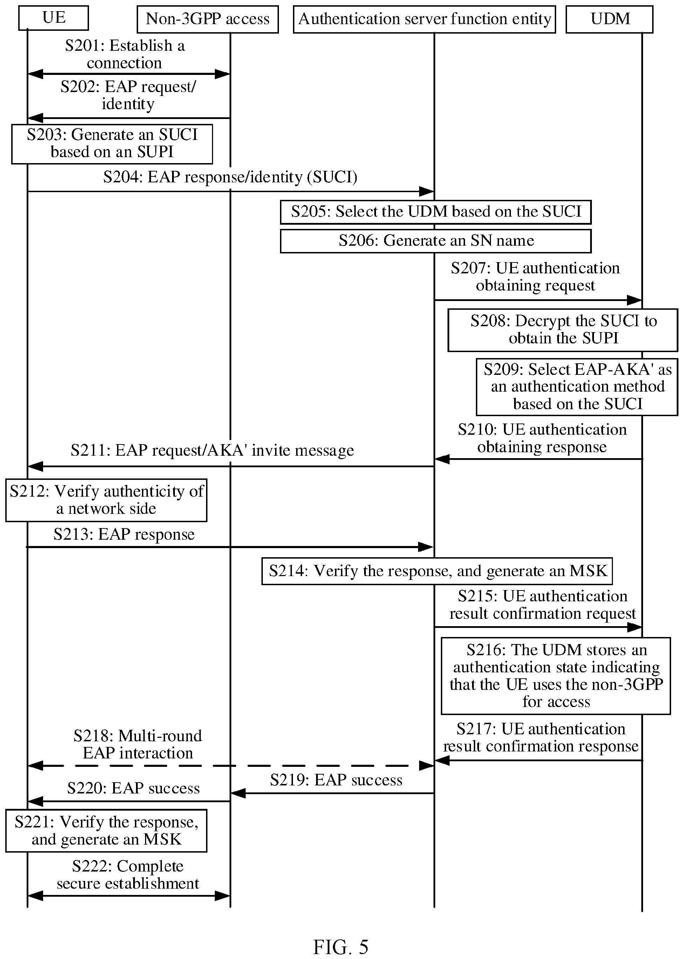

With reference to FIG. 5, the following describes in detail a secure communication method 200 provided in this application. FIG. 5 is a schematic interaction diagram of the method 200 according to this application. In the method 200, an SUCI or indication information generated by UE indicates a UDM to select an EAP-AKA' authentication method.

S201: The UE establishes a connection with a non-3GPP access network element.

For example, a non-3GPP access technology used by the UE herein may be WLAN. If the non-3GPP access technology is the WLAN, the non-3GPP access network element is a Wi-Fi AP. The following uses the Wi-Fi AP as an example for description.

It should be understood that a Wi-Fi AP network accessed by the UE may support only an NSWO manner or only a non-NSWO manner, or may support both an NSWO manner and a non-NSWO manner. Therefore, when receiving a message from the Wi-Fi AP, UE needs to first determine whether to use the non-NSWO manner or the NSWO manner for access. The message herein is a message sent by the Wi-Fi AP to the UE in a process of establishing the connection between the UE and the Wi-Fi AP. For information exchange in the process of establishing the connection between the UE and the Wi-Fi AP, refer to related information exchange in IEEE 802.11. In an example, when reference is made to the related information exchange in IEEE 802.11, the information exchange may be directly used, and the message sent by the Wi-Fi AP to the UE is used as a trigger condition for triggering the UE to determine whether the UE accesses the network in the non-NSWO manner or the NSWO manner. Alternatively, in another example, on the basis of the related information exchange in IEEE 802.11, indication information indicating the UE to determine whether to access the network in the non-NSWO manner or the NSWO manner may be added to the message sent by the Wi-Fi AP to the UE.

The UE may determine whether to access the network in the non-NSWO manner or the NSWO manner in the following manner. For example, the UE may determine which access manner is to be selected by using a locally stored list, a local policy, or manual selection by a user of the UE.

In an example, the UE locally stores a list of Wi-Fi APs, service set identifiers (service set identifiers, SSIDs), or WLAN network names. If a Wi-Fi AP, a service set identifier, or a WLAN network name is in the list, non-NSWO access is preferentially used, or NSWO access is preferentially used. The list may be configured by a carrier for the UE in a plurality of manners, for example, over-the-air (over the air, OTA), or may be transferred to the UE by using a NAS message, for example, a UE parameter update (UE Parameters Update, UPU) procedure, or may be configured in another manner. This is not limited in this application.

In another example, the local policy may be network selection logic or access method selection logic, and may include one or more policy forms, for example, a whitelist, a blacklist, and access method prioritization. The local policy may be transferred by the carrier to the UE by using the OTA or the NAS message. For example, a UE route selection policy (UE route selection policy, URSP) is transferred by using the NAS message. The URSP may indicate whether to preferentially use a non-NSWO access method or an NSWO access method when the UE accesses a Wi-Fi AP. The local policy may further indicate the UE to preferentially use the non-NSWO access, and the NSWO access method may be selected only after the non-NSWO access fails. There may be a plurality of methods for configuring the local policy, and an objective of the local policy is to enable the UE to access the network based on a specific network access logic. The user of the UE can select a network through a screen of a mobile phone. When the network can be accessed by using both the non-NSWO and the NSWO, the user can select a desired access manner based on a dialog box displayed on the screen.

S202: The Wi-Fi AP sends an EAP request/identity (EAP-Request/Identity) message to the UE, to trigger EAP authentication.

Alternatively, the message may be an EAP-request/AKA'-identity message.

S203: The UE ignores parameters such as a locally stored security context and 5G globally unique temporary identity (SG-globally unique temporary identity, 5G-GUTI), and generates an SUCI by using an IMSI.

When the UE has accessed the network in a 3GPP manner or the non-NSWO manner, the UE may locally store a valid 5G-GUTI and a NAS security context. In this case, if the UE is using the 3GPP manner for access, the UE locally stores not only the valid 5G-GUTI, the NAS security context, but also an access stratum (access stratum, AS) security context. After it is determined that the UE uses the NSWO mode for access, the UE does not use the locally stored 5G-GUTI and the valid security context. Instead, the UE needs to generate an SUCI based on an SUPI. This is because the SUPI corresponding to the 5G-GUTIis stored on an AMF. In the NSWO access manner, the AMF is not involved. If the 5G-GUTI needs to be sent, the UDM needs to send the 5G-GUTI to a corresponding AMF, and the corresponding AMF sends the SUPI to the UDM. To indicate the UDM to select the EAP-AKA' authentication method, the UE herein may use the following two indication manners, to respectively indicate, by using indication information other than the SUCI and the SUCI, the UDM to select the EAP-AKA' authentication method, or indicate that the UE is in an NSWO scenario.

The SUCI indicates the unified data management entity to select EAP-AKA' to perform authentication with the terminal device. The SUCI is used as an example to indicate that a receiver of the SUCI may learn, based on the SUCI, that the unified data management entity needs to be indicated to select the EAP-AKA' to perform authentication with the terminal device. When the receiver is the unified data management entity, the unified data management entity determines, based on the SUCI, to select the EAP-AKA' to perform authentication with the terminal device.

The indication information other than the SUCI indicates that the UE is in the NSWO scenario (or indicates the UE to use the NSWO manner for access). The indication information other than the SUCI is used as an example to indicate that a receiver of the indication information may learn, based on the indication information, that the UE accesses the network in the NSWO manner. When the receiver is the unified data management entity, the unified data management entity determines, based on the indication information, to select the EAP-AKA' to perform authentication with the terminal device.

Indication manner 1: The SUCI indicates the UDM to select the EAP-AKA' authentication method.

The UE may generate the SUCI in a plurality of manners. The following uses two implementations as an example for description.

Implementation 1: A current access method is indicated to the UDM by the SUCI, so that the UDM can select the EAP-AKA'.

In an example, if the SUPI of the UE is of an IMSI type, the UE generates an SUCI in an NAI format, and the SUCI includes a partial @ nai.5GC.mnc<MNC>.mcc<MCC>.3gppnetwork.org including a security protection result. That is, if the format of the SUPI corresponds to the NAI format, a username part includes the security protection result. For example, the IMSI is 234150999999999, where MCC = 234, MNC= 15, and MSISN = 0999999999. A routing identifier (routing identifier) is 678 and a home network public key identifier (home network public key identifier) is 27. In this case, composition of the SUCI in the NAI format may be:
type0.rid678.schid1.hnkey27.ecckey<ECC ephemeral public key>.cip< encryption of 0999999999>.mac<MAC tag value>@nai.5GC.mnc<MNC>.mcc<MCC>.3gppnetwork.org.
type0.rid678.schid1.hnkey27.ecckey<ECC ephemeral public key>.cip< encryption of 0999999999>.mac<MAC tag value> is the username part, and the security protection part is cip< encryption of 0999999999>.mac<MAC tag value>.

It should be understood that, for the SUCI in FIG. 3, if the SUPI type is 0, that is, the IMSI, a current SUCI format is not the NAI format, but the IMSI format.

Correspondingly, in subsequent steps, if the UDM sees the SUCI in the NAI format, the EAP-AKA' authentication method is selected.

In another example, if the SUPI of the UE is of a non-IMSI type, the UDM may configure that the EAP-AKA' authentication method is selected for all SUCIs in the NAI format. In this case, the UDM selects the EAP-AKA' authentication method provided that the SUCI is in the NAI format. Generally, in a 5G system, the UDM may select an authentication method based on the SUPI. However, in this application, the UDM selects an authentication method based on the SUCI format.

In conclusion, in Implementation 1, if the SUPI format is the IMSI, the SUCI in the NAI format is generated to indicate the UDM to select the EAP-AKA' authentication method; or if the SUPI format is the non-IMSI type, the UDM may configure that the EAP-AKA' authentication method is selected for all SUCIs in the NAI format.

Implementation 2: Indication information 04 is added to the SUCI. The indication information 04 indicates that the EAP-AKA' authentication method needs to be used, or indicates an access manner. The access manner is not the 3GPP or the non-NSWO access manner, and may be the NSWO access manner. That is, the indication information 04 may be added to the SUCI in a NAI format, or the indication information 04 may be added to the SUCI in a non-NAI format.

It should be noted that the added indication information 04 may be added to a username part of the NAI format, or the added indication information 04 may be added to an example part of the NAI format. This is not limited in this application.

For example, the added indication information 04 indicates that the UDM needs to select a proper access technology based on an access scenario, or indicates a primary authentication method that needs to be used. In this embodiment, the indication information 04 indicates to the UDM that the access method is the NSWO access method or an EAP authentication method needs to be used, and the UDM selects the EAP-AKA' authentication method based on the indication information. For example, the indication information 04 may be a character string, for example, "NSWO" or "non-3GPP". "NSWO" indicates that the NSWO manner is used for access, and "non-3GPP" indicates that a non-NSWO method is used for access. For example, the indication information 04 "NSWO" is added before the SUCI, and composition of the SUCI is "NSWO" username@ nai.SGC.mnc<MNC>.mcc<MCC>.3gppnetwork.org. Alternatively, the added indication information may be other content. This is not limited in this application. For another example, the indication information 04 may be a number such as 0 or 1. For example, in this embodiment, composition of the SUCI may be 6username@ nai.SGC.mnc<MNC>.mcc<MCC>.3gppnetwork.org. Alternatively, method0, method1, or method2 may be added to the username part of the indication information 04, to indicate that 5G-AKA, EAP-AKA', and another authentication method need to be respectively used. In this embodiment, composition of the SUCI may be method1.username@example.com, where method1 indicates that the EAP-AKA' authentication method needs to be used. For another example, the indication information may be bit indication information, for example, two bits are selected for indication. Indication information 00 indicates that the EAP-AKA' authentication method needs to be used or indicates an access manner, where the access manner is not the 3GPP or the non-NSWO access manner.

Indication manner 2: Indication information 05 is transferred in the message, and the indication information 05 indicates an access method or a preferred authentication method. For example, the indication information 05 indicates the UDM to select the EAP-AKA' authentication method; or indicates an access manner, for example, may be the NSWO access manner.

For example, based on a current manner of generating the SUCI, the generated indication information 05 is added to an EAP response/identity message that carries the SUCI in S204. It should be noted that the indication information 05 may be placed in the EAP message, or may be placed outside the EAP message. This is not limited in this application.

In a possible implementation, after the UE determines that the NSWO manner is used for access, the UE selects, based on a locally stored route identity (routing ID, RID), a RID used in the NSWO mode. The RID is a necessary part of the SUCI. A value can be a default value or a value configured by a carrier. In a current technology, the RID is used for discovering and selecting an AUSF and a UDM. After the NSWO is introduced to 5G, the UE only needs to use a primary authentication function provided by the carrier. Therefore, the carrier may use an AUSF and a UDM that are dedicated for NSWO authentication. An advantage of this is that an impact on an existing network architecture is minimized, and the keys used by the UE to access the network in both the NSWO mode and the non-NSWO mode do not affect each other. That is, the two modes of the UE do not affect each other when being implemented on a network side. To achieve the foregoing objective, the AUSF and the UDM that are dedicated for NSWO authentication may be introduced. For example, the carrier may separately configure a RID used in the NSWO mode and a RID used in the non-NSWO mode for the UE. The RID used in the NSWO mode is used for discovering the AUSF and UDM that are dedicated for NSWO authentication. The RID used in the non-NSWO mode is used for finding an AUSF and a UDM that can provide services for traditional access. Therefore, if the UE locally stores a RID used in the NSWO mode and a RID used in the non-NSWO mode, when the UE accesses the network in the NSWO manner, the UE may select the RID corresponding to the NSWO mode, and use the RID to construct an SUCI. It may be understood that the RID used in the NSWO mode in this manner may be the indication information indicating that the terminal device is in the NSWO scenario/indicating to select the EAP-AKA' authentication method in this embodiment of this application.

S204: The UE replies with the EAP response/identity message to the Wi-Fi AP, and the Wi-Fi AP forwards the message to an authentication server function entity.

It should be understood that the authentication server function entity may include one network element or a plurality of network elements. For example, the authentication server function entity may include at least one of a 3GPP AAA server and an AUSF.

For example, in correspondence with Indication manner 1 in S203, the UE sends the SUCI in the NAI format to the authentication server function entity by using the message; or in correspondence with Indication manner 2 in S203, the UE sends the indication information 05 to the authentication server function entity by using the message. S205: The authentication server function entity selects a UDM based on the RID in the SUCI.

S206: The authentication server function entity generates an SN name.

The SN name may be 5G: serving network ID, or may be in another form. For specific implementation, refer to the method 400 to the method 700.

Optionally, when the authentication server function entity includes one or more functions or one or more network elements, the SN name may be generated and the UDM may be selected by using different functions or in different network elements. For specific implementation, refer to the method 400 to the method 700.

S207: The authentication server function entity sends a UE authentication obtaining request (Nudm _UE-Authentication_Get Request) message to the UDM. The message carries the SUCI and the SN name, or carries the SUCI, the indication information 05 in Indication manner 2 in step S203, and the SN name.

S208: The UDM decrypts the SUCI to obtain the SUPI.

S209: The UDM determines, based on the SUCI or the indication information 05 in Indication manner 2 in step S203, to select the EAP-AKA' authentication method.

In correspondence with Implementation 1 in Indication manner 1 in S203, because generally, only the SUCI in the non-NAI format is generated for the SUPI of the IMSI type, if the UDM receives an SUCI in the NAI format, but the SUPI type of the SUCI is the IMSI, the UDM may select the EAP-AKA' authentication method based on the SUPI. Alternatively, the UDM determines, based on the SUCI in the NAI format, to select the EAP-AKA' authentication method.

Alternatively, in correspondence with Implementation 2 in Indication manner 1 in S203, when the UDM receives the SUCI that carries the indication information 04, the UDM may select the EAP-AKA' authentication method based on the indication information 04 in the SUCI.

Alternatively, in correspondence with Indication manner 2 in S203, when the UDM receives the independent indication information 05, the EAP-AKA' authentication method is selected based on the indication information 05.

Optionally, before the UDM selects the EAP-AKA' authentication method, the UDM verifies whether the UE has permission to use the NSWO mode. For example, the UDM performs verification based on subscription data of the UE. If the UDM records that the UE supports the NSWO mode, the authorization verification succeeds; or if the UDM does not record that the UE supports the NSWO mode, the authorization verification fails. If the UE authorization verification succeeds, step S210 is performed; or if the UE authorization verification fails, the UE sends a reject message carrying a reject cause value to an authentication server.

S210: The UDM replies with a UE authentication obtaining response (Nudm_UEAuthentication_Get Response) message to the authentication server function entity, where the message carries an AV and the SUPI.

S211: The authentication server function entity reserves the SUPI, determines to use an EAP authentication method, and sends an EAP request/AKA' invite (EAP Request/AKA'-Challenge) message to the UE.

S212: The UE verifies authenticity of the network side. After the verification succeeds, the UE generates an MSK and proceeds to a next step.

For example, before the UE verifies the authenticity of the network side, the UE first obtains an SN Name that is the same as that of the network side. The UE may generate the SN Name by itself, or obtain the SN Name in step S211.

Optionally, when the authentication server function entity is the AUSF or the authentication server function entity is the plurality of network elements including the AUSF, the UE further generates Kausf before performing a next step.

There may be the following methods for processing whether the UE generates the Kausf.

Manner 1: The UE generates the Kausf in an authentication process, and stores the Kausf when receiving EAP-Success.

Specifically, after generating the Kausf, the UE first stores the Kausf in a cache area. In this embodiment of this application, a cache area in which the terminal device stores the intermediate key Kausf is referred to as first storage space. After the EAP-Success message is received, the Kausf is stored. Storing the Kausf is replacing a stored Kausf with a latest generated Kausf. Specifically, the UE uses the newly generated Kausf in the first storage space to replace the Kausf previously stored in second storage space. The UE subsequently uses the Kausf in the second storage space (long-term storage space) to perform authentication and communication in a SoR or UPU procedure. In another case, if an EAP re-authentication procedure (EAP re-authentication protocol, ERP) is supported in the NSWO scenario, the UE needs to store the Kausf or store a key used for ERP authentication.

Manner 2: The UE generates the Kausf in an authentication process, but does not store the Kausf.

Specifically, the UE needs to determine, based on a current NSWO access manner, that the Kausf does not need to be stored. The UE may generate but does not store the Kausf, or the UE may not generate the Kausf. If the Kausf is not stored, the Kausf may be deleted immediately after being generated, or the Kausf may be deleted after a period of time after being generated, for example, deleted after the EAP-Success message is received.

Manner 3: The UE generates an EMSK (Extended Master Session Key, extended master session key) in an authentication process, but does not use the EMSK as the Kausf.

Specifically, if the UE determines that the EMSK is in an NSWO procedure, the UE does not use most significant bits of the EMSK as the Kausf. Further, optionally, the EMSK is used according to an EAP procedure of the EMSK, for example, used as a root key of the ERP procedure.

Manner 4: If the authentication server on the network side is not the AUSF, the Kausf is not generated.

Alternatively, the MSK and the Kausf may also be generated in step S221.

S213: The UE sends an EAP response/AKA' invite (EAP Response/AKA'-Challenge) message to the authentication server function entity.

S214: The authentication server function entity verifies authenticity of the UE, generates an MSK, and optionally, further generates Kausf and stores the Kausf.

For example, when the authentication server function entity is the AUSF, generating the Kausf is a method for minimizing a change to the AUSF. If the minimum change is not pursued, the AUSF may not generate the Kausf, or the AUSF generates the Kausf but does not store the Kausf. If the Kausf is not stored, the Kausf may be deleted immediately after being generated, or may be deleted after a period of time. In conclusion, the AUSF considers that the Kausf is not stored after the UE is authenticated successfully.

Specifically, there may be the following several methods for processing whether the AUSF generates the Kausf.

Manner 1: The AUSF generates the Kausf, but does not store the Kausf. For example, if the AUSF determines that the Kausf is generated in the NSWO procedure, the AUSF does not store the Kausf.

Manner 2: If the AUSF needs to subsequently use the Kausf, the AUSF may store the Kausf. For example, if the AUSF supports the SoR and UPU procedures, the AUSF stores the Kausf.

Manner 3: The AUSF does not generate the Kausf. For example, if the AUSF determines that the NSWO access manner is used, the AUSF does not generate the Kausf. Specifically, the AUSF may generate an EMSK, but does not use the first 256 bits of the EMSK for the Kausf. Further, optionally, the EMSK is used according to an EAP procedure of the EMSK, for example, used as a root key of the ERP procedure.

For example, if the EAP re-authentication procedure (EAP re-authentication protocol, ERP) procedure is supported in the NSWO scenario, when the authentication server function entity is the AUSF, the Kausf needs to be stored or the EMSK of the Kausf needs to be generated.

For example, when the authentication server function entity is 3GPP AAA, the Kausf may not be generated.

Optionally, S215: The authentication server function entity sends a UE authentication result confirmation request (Nudm _UEAuthentication_ResultConfirmation Request) message to the UDM.

It should be understood that, in a case in which the Kausf needs to be stored in a standard or a scenario, or the network side needs to record an authentication result of the UE, step S215 is performed. Correspondingly, in a possible implementation, if the authentication function entity determines that the NSWO mode is in use for access by the UE, an authentication function entity does not need to initiate the procedure S215 to S217 after successfully authenticating the UE. It should be noted that, when the Kausf needs to be stored, this step is definitely performed.

Specifically, whether the network side needs to record the authentication result of the UE is determined based on the carrier requirement or a standard specification.

Optionally, S216: The UDM stores a current authentication success state indicating that the UE uses non-3GPP for access. Alternatively, more specifically, the UDM stores a current authentication success state indicating that the UE uses the WLAN for access, or the UDM stores a current authentication success state indicating that the UE uses the NSWO for access.

If step S215 is performed, this step is performed; or if step S215 is not performed, this step is not performed either.

The following uses two possible manners as an example to describe in detail a storage manner of the UDM.

Manner 1: The UDM maintains a piece of authentication success state information. In other words, the UDM reuses an entry in which authentication is performed in the non-NSWO access manner. After the UDM determines that the initial authentication performed in the NSWO access manner succeeds, the UDM updates the entry. There are two possible update manners for the UDM: In the first manner, a record is added to indicate that the authentication performed in the NSWO mode succeeds, and an ID of an authentication server function entity that is authenticated in the authentication is added (for example, when the UE does not use the 3GPP access manner and the non-NSWO access manner for access, that is, when no authentication occurs), or an ID of an original authentication server function entity is replaced; and in the second manner, information identifying that the authentication success state is in the NSWO mode is added to information of the existing entry, and an ID of an existing authentication server function entity or an ID of a newly added authentication server function entity is not replaced. In this case, the related information about the authentication success state does not include the ID of the authentication server function entity used in the NSWO access mode.

It should be understood that the authentication function entity ID serving the NSWO is not stored because the network side does not need to maintain a state of the UE for the UE that is authenticated by using the NSWO. The UE may re-initiate an authentication procedure each time the UE uses the NSWO service. Therefore, the UDM does not need to maintain authentication-related state information of the UE, for example, information about whether authentication succeeds.

Manner 2: The UDM may maintain two pieces of authentication state information. One piece is used in a primary authentication procedure sent in a 3GPP access procedure and a non-NSWO access procedure, and the other piece is used in a primary authentication procedure that occurs in the NSWO access. The two pieces of related information about the authentication success state each include an ID of an authentication server function entity and indication information. One piece of related information about the authentication state records an authentication result of authentication currently initiated by the UE by using the NSWO access method, or may indicate an authentication result of authentication initiated by the UE in the NSWO manner. The indication information in the other piece of related information about the authentication success state may indicate an authentication result of authentication currently initiated by the UE by using a SGC (or more specifically, an AMF), or indicate an authentication result of authentication initiated by the UE by using the 3GPP access and the non-NSWO access.

It should be understood that, storing the ID of the authentication server function entity may help the UDM find the authentication server function entity that performs authentication for the UE in the NSWO scenario, and the key stored by the authentication server function entity may be used.

Manner 3: The UDM only receives a message and does not perform any processing.

S217: The UDM replies with a UE authentication result confirmation response (Nudm _UEAuthentication_ResultConfirmation Response) message to the authentication server function entity.

S218: The authentication server function entity performs optional multi-round EAP interaction with the UE.

It should be noted that numbers of S215 and S218 do not limit an execution sequence. To be specific, S218 may be performed before S215, or may be performed after S215. S217 and S218 may not have any association relationship.

S219 and S220: The authentication server function entity sends an EAP success (EAP-Success) message to the UE through the Wi-Fi AP. In step S219, the authentication server function entity sends the generated MSK to the Wi-Fi AP.

S221: The UE authenticates authenticity of the authentication server function entity.

Optionally, the UE generates the Kausf. If the authentication server function entity is an AUSF or includes an AUSF, and the Kausf is not generated in step S212, the Kausf is generated in this step. For a specific generation manner, refer to corresponding descriptions in S212.

S222: The UE and the Wi-Fi AP complete secure establishment.

For example, the UE generates a kwlan based on the MSK, and performs security establishment based on the kwlan. The kwlan may be a key used by the UE to subsequently communicate with the network side, or the UE and the network side may subsequently continue to derive, based on the kwlan, a key used for communication.

In this embodiment of this application, the NSWO scenario is applied to the 5G system, so that an application scope of the NSWO access manner is extended. In addition, the UDM is indicated to select the EAP-AKA' authentication method, so that the authentication procedure between the UE and the SGC in the NSWO scenario can be improved. In addition, in the NSWO scenario, when accessing the SGC by using the non-3GPP access technology, the terminal device may not pass through the AMF. This reduces load of the AMF and reduces overheads of deploying an architecture in which the UE accesses the SGC by using the non-3GPP technology. In addition, when recording the authentication success state, the UDM may record only the state in which the authentication succeeds in the NSWO, and does not record the ID of the authentication server function entity. This is easy to maintain, and a small quantity of network elements need to be changed, thereby facilitating quick commercial use. Alternatively, the authentication success state in the NSWO may be bound to the ID of the authentication server function entity, so that the entry recorded by the UDM is clearer.

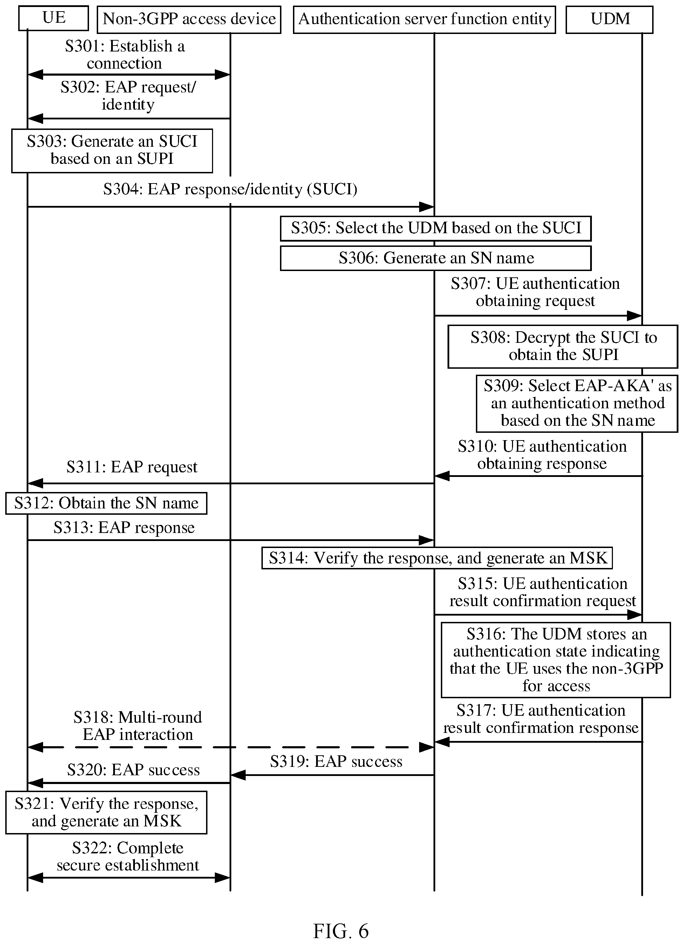

With reference to FIG. 6, the following describes in detail a secure communication method 300 provided in this application. FIG. 6 is a schematic interaction diagram of the method 300 according to this application. In the method 300, an SN name or indication information generated by an authentication server function entity indicates a UDM to select an EAP-AKA' authentication method.

For S301, refer to related descriptions in S201, and for S302, refer to related descriptions in S202.

S303: The UE generates an SUCI. For specific implementation, refer to a current method for generating an SUCI by the UE.

For S304, refer to related descriptions in S204, and for S305, refer to related descriptions in S205.

S306: The authentication server function entity generates the SN name.

To indicate the UDM to select an EAP-AKA' authentication method, the authentication server function entity herein may use the following two indication manners, to respectively indicate an access method or an authentication method by using the SN name or by using the indication information other than the SN name.

Indication manner 1: The authentication server function entity generates the SN name or obtains all or some information about the SN name from a received message.

The SN name generated by the authentication server function entity may include at least one of the following: an identifier of the authentication server function entity, an identifier of a network in which a terminal device is located, access technology type indication information, access method indication information, or the like.
(1) The identifier of the network in which the terminal device is located includes an identifier of a serving network or an identifier of an access network. The identifier of the access network herein may be understood as an identifier of a network in which a Wi-Fi AP is located. Generally, the identifier of the serving network is understood as an identifier of a network in which an AMF is located. Because the AMF is not used in this embodiment of this application, the identifier of the serving network herein may be understood as an identifier of a proxy (if a network architecture accessed by UE includes the proxy), or may be understood as the identifier of the access network (if a network architecture accessed by UE does not include the proxy). (2) Technology type indication information indicates a type of an access technology used by the UE. For example, the access technology may be a 3GPP access technology, a non-3GPP access technology, a WLAN access technology, a Bluetooth access technology, or a microwave access technology. (3) The access method indication information indicates a network access method that the UE plans to use, for example, an NSWO method, a non-NSWO access method, a 3GPP access method, or a microwave access method. Regardless of the technology type indication information or the access method indication information, a function of the technology type indication information or the access method indication information is to provide information for the network, so that the network obtains a current feature of the UE, to affect a decision of the network on an authentication method of the UE.

It should be understood that access type indication information or the access method indication information may be generated by the authentication server function entity, or may be obtained from the received message. For example, the access type indication information or the access method indication information may be added by the Wi-Fi AP. In this case, in step S204, the Wi-Fi AP may carry the access type indication information or the access method indication information in the message when forwarding the message to the authentication server function entity to transfer the EAP message. For another example, the access type indication information or the access method indication information may be added by the UE, and the UE sends the EAP message to the authentication server function entity in step S204.

It should be noted that, in this embodiment of this application, the technology type indication information and the access method indication information indicates that the UE currently uses the NSWO access method, and a final objective is to enable the UDM to finally select the EAP-AKA' authentication method with reference to the indication information.

The authentication server function entity may determine, based on a message source or an information element carried in the message, an access method, to generate the SN name. For example, when the authentication server function entity receives, from an AMF, a message indicating that authentication needs to be performed on the UE, the authentication server function entity may determine whether the 3GPP access method or the non-NSWO access method is used. For another example, if the information element may carry a network function type, the authentication server function entity may determine, based on the network function type, whether a message sender is an AMF, a Wi-Fi-AP, or a proxy.

For example, when the authentication server function entity receives, from the Wi-Fi AP or a non-AMF function entity, a message indicating that authentication needs to be performed on the UE, the authentication server function entity determines that NSWO access is used, or determines that non-NSWO access is not used. Afterward, the authentication server function entity uses an identifier that is capable of distinguishing access methods, such as an access network identity (access network identity) or an access network type (access network type), to identify a specific access method, and generates the SN name based on the identifier.

In addition, the access network identity (access network identity) or the access network type (access network type) may also be obtained by the authentication server function entity from the UE or the Wi-Fi AP. For example, in step S204, the UE sends the access network identity or the access network type to the authentication server function entity along with the EAP message, or in step S204, the Wi-Fi AP may carry the access network identity or the access network type in an EAP response/AKA' identity message that is sent to the authentication server function entity.

In an example, after determining the access method based on the message source or the indication information, the authentication server function entity obtains or generates an access network identity and an access network type. For example, the access network identity may be an ID of a network in which the Wi-Fi AP is located, may be an ID of the Wi-Fi AP, may be a Bluetooth ID, or may be an ID that can be identified by the UDM and that is distinguished from a current service network name. It should be understood that the current serving network may be understood as a serving network in which the AMF is located or a serving network of a carrier. In this application, a service network name (SN name) is distinguished from the current service network name, so that the UDM can determine, based on an ID in the SN name, a serving network from which the UE accesses. The access network type may indicate an access network type, and the access network type indicates a specific wireless air interface technology, for example, "WLAN", "WLAN access network", "NSWO", "Bluetooth", "microwave", Restrictive non-3GPP access network type I, Restrictive non-3GPP access network type II, or Restrictive non-3GPP access network type I. To obtain the same format as an existing SN name, 5G may still be added before the SN name. For example, the format may be 5G: access network identity, or 5G: access network type. For another example, the format may be 5G: WLAN, 5G: Wi-Fi AP, or the like. Alternatively, it may not be considered that the SN name is associated with an existing SN name in the same format. For example, only a received or generated access network identity is transferred, or only a received or generated access network type is transferred. A specific format is not limited in this embodiment of this application.

Therefore, in this embodiment of this application, the SN name generated by the authentication server function entity is distinguished from the SN name used in the 3GPP access and the non-NSWO access, to have an indication function.

Indication manner 2: The authentication server function entity obtains or generates indication information 06, where the indication information 06 indicates the UDM to select the EAP-AKA' authentication method.

Alternatively, the indication information 06 may indicate the UE to perform access in an NSWO scenario, or indicate the UE to perform access in an NSWO manner, so that the UDM selects the EAP-AKA' authentication method based on the indication information 06.

In a specific scenario, indication information 05 and the indication information 06 may be combined for transmission. For example, the indication information 05 and the indication information 06 may be combined and then transferred by using an information element (information element, IE) corresponding to the SN name. In this way, a change introduced by a new function may be reduced.

In an example, the SN name may be SG:NSWO. mnc015.mcc234.3gppnetwork.org. NSWO indicator. In another example, the SN name may alternatively be 5G:mnc015.mcc234.3gppnetwork.org. NSWO. Alternatively, the SN name may be in another format. A specific format is not limited in this embodiment of this application.

For example, the indication information 06 may be generated by the authentication server function entity based on a message source, or may be generated based on a part or all of a received SN name, or may be obtained by the authentication server function entity from a message transferred by a Wi-Fi AP. The indication information 06 may be sent to the UDM by using a UE authentication obtaining request message. The authentication obtaining request message may be a Nudm_UEAuthentication_Get Request message.

For S307, refer to related descriptions in S207, and for S308, refer to related descriptions in S208.

S309: The UDM selects the EAP-AKA' authentication method based on the SN name or the indication information 06.

In correspondence with Indication manner 1 in S306, if the UDM determines that specific content in the SN name is, for example, an access network type or access network identity information, the UDM selects the EAP-AKA' authentication method.

For example, the UDM determines, based on the SN name, that a terminal device accesses a network in an NSWO scenario, and selects EAP-AKA' to perform authentication with the terminal device.

In correspondence with Indication manner 2 in S306, the UDM receives the SN name and the indication information 06 indicating the access manner for the UDM or indicating that the UDM needs to select the EAP-AKA' authentication method, and determines to select the EAP-AKA' authentication method.

Optionally, before the UDM selects the EAP-AKA' authentication method, the UDM verifies whether the UE has permission to use the NSWO mode. For example, the UDM verifies whether the UE has permission to use a serving network indicated by the SN name. For another example, the UDM performs verification based on subscription data of the UE. For another example, the UDM first performs verification based on the subscription data of the UE, and after the verification succeeds, verifies whether the UE has permission to use the serving network indicated by the SN name. If the UE authorization verification succeeds, step S310 is performed; or if the UE authorization verification fails, the UE sends a reject message carrying a reject cause value to an authentication server.

After selecting the EAP-AKA' authentication method, the UDM generates an EAP-AKA'-related authentication vector AV When the SN name includes the indication information 05 and the indication information 06, the UDM may directly use the SN name including the indication information 05 and the indication information 06 to obtain the EAP-AKA'-related authentication vector, or the UDM may use only a part related to the indication information 05 as the SN name. For example, if the SN name is SG:NSWO. mnc015.mcc234.3gppnetwork.org. NSWO indicator, the UDM uses SG:NSWO. mnc015.mcc234.3gppnetwork.org as the SN name or SG:NSWO as the SN name.

For S310 to S322, refer to related descriptions of S210 to S222.

It should be additionally noted that in step S312, the UE may obtain the SN name by itself, or may obtain the SN name in step S311. For a type of the SN name obtained by the UE, refer to related descriptions of step S306. For a method for using the SN name by the UE in the EAP-AKA', refer to related descriptions of step S309.

In this embodiment of this application, the NSWO scenario is applied to a 5G system, so that an application scope of the NSWO access manner is extended. In addition, the UDM is indicated to select the EAP-AKA' authentication method, so that an authentication procedure between the UE and a SGC in the NSWO scenario can be improved. In addition, in the NSWO scenario, when accessing the SGC by using the non-3GPP access technology, the terminal device may not pass through the AMF. This reduces load of the AMF and reduces overheads of deploying an architecture in which the UE accesses the SGC by using the non-3GPP technology. In addition, compared with a current authentication state stored in the UDM, only an authentication success state may be recorded, and an ID of the authentication server function entity is not recorded. This is easy to maintain, and a small quantity of network elements need to be changed, thereby facilitating quick commercial use. Alternatively, indication information indicating whether authentication is initiated in the NSWO manner may be added on a basis of binding the authentication success state to the authentication server function entity, so that an entry recorded by the UDM is clearer.

Optionally, in S306, in addition to indicating, by using the SN name or the indication information 06, the UDM to select the EAP-AKA' authentication method, the authentication server function entity may further have another implementation. For example, the access method indicated by the authentication server function entity to the UDM may be NSWO access or non-NSWO access, and the authentication method may be SG-AKA or EAP-AKA'. Correspondingly, when the authentication server function entity indicates the access method to the UDM, the UDM may further determine, based on the access method, an authentication method to be selected. For example, if the NSWO access is indicated, the UDM selects an EAP authentication method; or if 3GPP access or the non-NSWO access is indicated, the UDM selects an authentication method based on an SUPI. When the authentication server function entity indicates the authentication method to the UDM, the UDM may directly determine the authentication method.

Optionally, in S307, if the SN name received by the UDM is not the SN name in S306, and the indication information 06 in S306 is not received, the UDM may determine the authentication method based on a current method for selecting an authentication manner by the UDM in the 5G network, that is, select the authentication method based on the SUPI. Alternatively, the UDM may determine, based on the SN name being a name of a service network in which the AMF is located, whether the 3GPP access or the non-NSWO access is used, and then select the authentication method based on the SUPI. In this way, the UDM may select an appropriate authentication method for the UDM based on different SN names.

It should be noted that a manner of indicating the UDM to select the EAP-AKA' authentication method may be used independently, for example, the method 200 or the method 300, or may be used in combination. For example, S303 in the method 300 is replaced with some or all of the solutions of S203 in the method 200, and solutions corresponding to S209 and S203 in the method 200 are added to S309 in the method 300, or may be used in combination in another manner. This is not limited in this application.

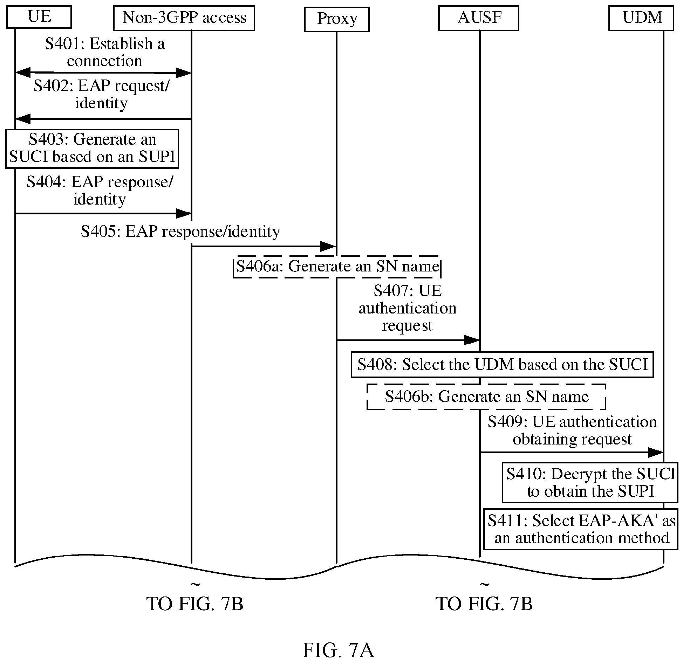

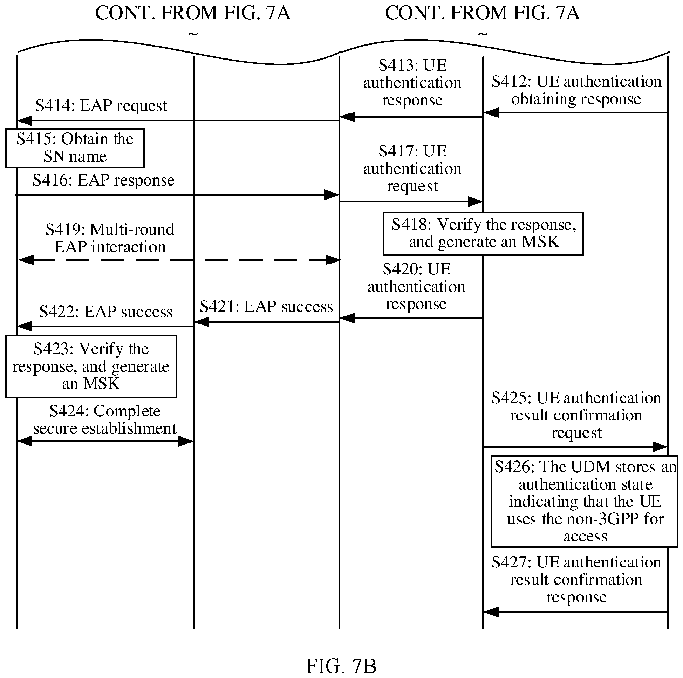

With reference to FIG. 7A and FIG. 7B, the following describes in detail a secure communication method 400 provided in this application. FIG. 7A and FIG. 7B are a schematic interaction diagram of the method 400 according to this application.

As shown in FIG. 7A and FIG. 7B, in the method 400, an authentication server function entity includes two network elements: a proxy and an AUSF.

For details about S401, refer to the foregoing descriptions of S201. For details about S402, refer to the foregoing descriptions of S202.

S403: Generate an SUCI based on an SUPI, or generate indication information 02.

For a possible implementation 1, refer to the descriptions of S203.

For a possible implementation 2, refer to the descriptions of S303.

For details about S404, refer to the foregoing descriptions of S204.

S405: A Wi-Fi AP forwards a message received from UE in S404 to the proxy (proxy).

Specifically, the Wi-Fi AP finds the proxy based on preconfigured information or based on a home network identifier in the SUCI, and sends an EAP-response/identity message to the proxy. The proxy is a previous hop of a next network element. A network element to which the proxy forwards the message is the proxy of the network element.

It should be understood that, in the method 400, a purpose or function of adding the proxy may include the following:
(1) To find an AUSF corresponding to the UE, a next hop of the proxy is the AUSF. In the method 400, a next hop of the proxy is an AUSF. Therefore, the proxy may be referred to as an AUSF proxy, or may be referred to as an AUSF-P.
(2) Reduce an exposure surface of a next-hop network element, or relay the message when the Wi-Fi AP cannot directly find the next-hop network element. The following uses the AUSF in the method 400 as an example for description. The AUSF is a network element related to authentication processing, and needs to store a key Kausf of the UE. If the AUSF is controlled by an attacker, the attacker may obtain many keys of the UE. Therefore, the possibility that the AUSF is directly found by a non-core network element needs to be minimized. The Wi-Fi AP is an internet protocol (Internet Protocol, IP) network element, and may be a network element that is not trusted by a carrier. Therefore, direct connection of the Wi-Fi AP to the AUSF poses a serious threat to security of the AUSF. Therefore, in this case, a proxy is required to first receive the message from the Wi-Fi AP.
(3) The proxy may also have some security functions, for example, intercepting a tampered data packet to be sent to the AUSF.
(4) Convert a service-based message and a non-service-based message.

It should be noted that, in a specific implementation, the proxy may be an independent network element, or may be integrated with network elements such as a non-3GPP interworking function (non-3GPP interworking function, N3IWF), an evolved packet data gateway (evolved packet data gateway, ePDG), a trusted WLAN cooperation function (trusted WLAN interworking function, TWIF), and a 3Gpp-AAA server. In other words, the N3IWF, the ePDG, the TWIF, and the 3Gpp-AAA server have a proxy function.

S406: Generate an SN name, or receive some parameters used for generating an SN name or forming an SN name, or generate indication information 03.

Specifically, the authentication server function entity in the method 200 and the method 300 includes the proxy and the AUSF in the method 400. Therefore, S406 may also be performed by the proxy or the AUSF. There may be a plurality of manners in a specific implementation of S406, for example, S406a or S406b in the following:
S406a: The proxy generates the SN name, or some parameters used for generating the SN name or forming the SN name are received from the Wi-Fi AP, or the indication information 03 is generated.

Alternatively, the proxy may further send, to the AUSF, the some parameters used for generating the SN name or forming the SN name.

Specifically, there may be a plurality of implementations for the proxy to generate the SN name or the indication information 03.

A possible implementation 1 corresponds to the possible implementation 1 in S403. For details about S406a, refer to descriptions of the authentication server function entity in S206.

It should be understood that, if the SUCI or the indication information 05 in S203 is generated in S403, the SN name is generated in S406a based on a general case with reference to S206. In this case, in S411, with reference to S209, an authentication method is indicated to the UDM by using the SUCI or the indication information 05 generated by the UE.

A possible implementation 2 corresponds to the possible implementation 2 in S403. For details about S406a, refer to descriptions of the authentication server function entity in S306.

It should be understood that, in S403, the SUCI is generated based on a general case, and in S406a, the SN name or the indication information 06 is generated with reference to S306. In this case, in S411, with reference to S309, an authentication method is indicated to the UDM by using the SN name or the indication information 06 generated by the proxy.

A possible implementation 3 corresponds to the possible implementation 1 in S403. For details about S406a, refer to descriptions of the authentication server function entity in S306.

It should be understood that the SUCI or the indication information 05 in S203 is generated in S403, and the SN name or the indication information 06 is generated in S406a with reference to S306. In this case, in S411, with reference to S209 and S309, an authentication method is indicated to the UDM by using the SUCI or the indication information 05 generated by the UE and the SN name or the indication information 06 generated by the proxy.

For example, the proxy generates an SN name based on a network ID of the proxy. For another example, the proxy generates an SN name based on parameters that are received from the UE and that form the SN name.

Further, optionally, the proxy may locally select, based on a value of a RID, or select, by using an NRF, an AUSF that supports an NSWO authentication function.

S406b: The AUSF generates the SN name, or receives, from the proxy, the some parameters used for generating the SN name or forming the SN name, or generates the indication information 03.

Specifically, there may be a plurality of implementations for the AUSF to generate the SN name and the indication information 03.

A possible implementation 1 corresponds to the possible implementation 1 in S403. For details about S406b, refer to descriptions of the authentication server function entity in S206.

It should be understood that, if the SUCI or the indication information 05 in S203 is generated in S403, the SN name is generated in S406a based on a general case with reference to S206. In this case, in S411, with reference to S209, an authentication method is indicated to the UDM by using the SUCI or the indication information 05 generated by the UE.

A possible implementation 2 corresponds to the possible implementation 2 in S403. For details about S406b, refer to descriptions of the authentication server function entity in S306.

It should be understood that, in S403, the SUCI is generated based on a general case, and in S406a, the SN name or the indication information 06 is generated with reference to S306. In this case, in S411, with reference to S309, an authentication method is indicated to the UDM by using the SN name or the indication information 06 generated by the AUSF.

A possible implementation 3 corresponds to the possible implementation 1 in S403. For details about S406b, refer to descriptions of the authentication server function entity in S306.

It should be understood that the SUCI or the indication information 05 in S203 is generated in S403, and the SN name or the indication information 06 is generated with reference to S306 in S406a. In this case, in S411, with reference to S209 and S309, an authentication method is indicated to the UDM by using the SUCI or the indication information 05 generated by the UE and the SN name or the indication information 06 generated by the AUSF.

For example, the AUSF receives a network ID of the proxy from the proxy, and generates an SN name based on the network ID. For another example, the parameter received by the AUSF from the proxy may be some parameters that are received by the proxy from the UE or the Wi-Fi AP and that are used for forming or generating an SN name. The AUSF generates the SN name based on the parameters. For example, the AUSF generates the SN name based on an access network identity (access network identity) or an access network type (access network type) received from the proxy.

S407: The proxy sends a UE authentication request (Nausf_UEAuthentication_Authenticate Request) message to the AUSF. The message carries the SUCI. Optionally, if S406 is implemented according to S406a, the message further includes the SN name generated by the proxy.

S408: The AUSF selects a UDM based on the SUCI.

Optionally, if the message received by the AUSF in S407 does not carry the SN name, S406 is implemented according to S406b.

For details about S409, refer to descriptions of S207. For details about S410, refer to descriptions of S208.

S411: The UDM selects EAP-AKA' as the authentication method.

A possible implementation 1 corresponds to the possible implementation 1 in S406. For details about S411, refer to descriptions of the authentication server function entity in S209.

It should be understood that, if the SUCI or the indication information 05 in S203 is generated in S403, the SN name is generated in S406a based on a general case with reference to S206. In this case, in S411, with reference to S209, the authentication method is indicated to the UDM by using the SUCI or the indication information 05 generated by the UE.

A possible implementation 2 corresponds to the possible implementation 2 in S406. For details about S411, refer to descriptions of the authentication server function entity in S309.

It should be understood that, in S403, the SUCI is generated based on a general case, and in S406a, the SN name or the indication information 06 is generated with reference to S306. In this case, in S411, with reference to S309, the authentication method is indicated to the UDM by using the SN name or the indication information 06 generated by the AUSF or the proxy.

A possible implementation 3 corresponds to the possible implementation 3 in S406. For details about S411, refer to descriptions of the authentication server function entity in S209 and S309.

It should be understood that the SUCI or the indication information 05 in S203 is generated in S403, and the SN name or the indication information 06 is generated in S406a with reference to S306. In this case, in S411, with reference to S209 and S309, the authentication method is indicated to the UDM by using the SUCI or the indication information 05 generated by the UE and the SN name or the indication information 06 generated by the AUSF or the proxy.

S412: The UDM replies with an authentication obtaining response (Nudm_UEAuthentication_Get Response) message to the AUSF. The message carries an authentication vectors AV and the SUPI.

S413: The AUSF replies with a UE authentication response (Nausf_UEAuthentication_Authenticate Response) message to the proxy.

S414: The proxy forwards the AV and the generated SN Name to the UE by using an EAP-request (EAP Request) message. Alternatively, the EAP request herein may also be an AKA'-Challenge message.

For details about S415, refer to descriptions of S212.

S416: The UE sends an EAP response (EAP Response) message to the proxy. Alternatively, the EAP response herein may also be an AKA'-Challenge message.

S417: The proxy sends a UE authentication request (Nausf_UEAuthentication_Authenticate Request) message to the AUSF.

S418: The AUSF verifies authenticity of the UE, and generates an MSK.

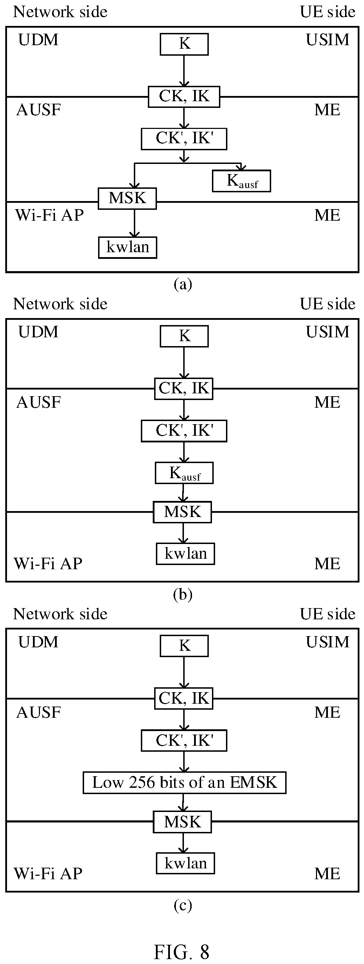

As shown in FIG. 8, the AUSF may generate the MSK by using the following key architecture and a plurality of methods.

In the key architecture shown in (a) in FIG. 8, on a network side, the UDM generates a CK and an IK based on a K, and then sends the CK and the IK to the AUSF. After receiving a CK' and an IK', the AUSF generates the MSK and an EMSK. Most significant 256 bits of the EMSK are used as Kausf. The AUSF sends the MSK to the Wi-Fi AP, and the Wi-Fi AP generates a kwlan based on the MSK. Similarly, on a UE side, a global subscriber identity module (universal subscriber identity module, USIM) and a mobile device (mobile equipment, ME) perform the same steps as those on the network side.

In a first method, after receiving the CK' and the IK', the AUSF generates the MSK and the EMSK. The most significant bits of the EMSK are used as the Kausf. Because the MSK is not used currently, the AUSF directly sends the MSK to the Wi-Fi AP.

If the UDM stores an entry in Manner 1 in step S426, the UDM may not store the Kausf, or may store the Kausf, to overwrite Kausf in a previous authentication process. If the Kausf is not stored, confusion of Kausf in a non-NSWO scenario may be avoided, because procedures such as SoR and UPU occur only in the non-NSWO scenario, and do not occur in an NSWO scenario. If the Kausf is stored to overwrite the Kausf in the previous authentication process, the Kausf is compatible with the current entry, stored by the AUSF, that authentication is performed successfully on the UE. That is, the Kausf needs to be stored provided that the Kausf is generated regardless of the authentication scenario. In another possible implementation, if ERP authentication is supported in the NSWO scenario, the Kausf needs to be generated and stored.

If the UDM uses manner 2 to store the entry, the AUSF may store the Kausf.

FIG. 8(b) shows another key architecture. A difference from the first key architecture lies in that the Kausf further generates the MSK.

In a second method, the Kausf further generates the MSK. There may be a plurality of methods for the Kausf to generate the MSK. For example, the SN name is used as an input parameter to generate the MSK, or "WLAN" is used as an input parameter to generate the MSK, or the SUPI is used as an input parameter to generate the MSK. Further, a distinguisher may be introduced, and different access scenarios are distinguished by using different values. For example, MSK = KDF (Kausf, distinguisher, distinguisher length, SUPI, SUPI length). The use of the distinguisher can reduce the Kausf, adapt to future development logic, reduce development workload, and accelerate commercial use.

In addition, for storage of the Kausf, refer to descriptions in the first method.

A difference between the key architecture shown in (c) in FIG. 8 and the key architecture shown in (a) in FIG. 8 lies in that least significant 256 bits of the EMSK are used as a base key, and are directly used as the MSK or used as a root key to generate a new MSK.

In a third method, least significant 256 bits of the EMSK are used as a base key, and are directly used as the MSK or used as a root key to generate a new MSK. For a method for generating the new MSK, refer to descriptions of the second method. For a Kausf storing method, refer to descriptions of the first method. An advantage of using the least significant 256 bits as the base key is to prevent key confusion. The most significant bits of the EMSK are used as a root key of a key used for an AMF to participate in authentication, and the least significant 256 bits are used as a root key when other authentication occurs.

For details about S419, refer to descriptions of S218.

S420: The AUSF sends a UE authentication response (Nausf_UEAuthentication_Authenticate Response) message to the proxy. The message does not carry the SUPI of the UE.

It may be understood that, in this scenario, the Wi-Fi AP cannot sense the SUPI of the UE, and no other network element needs to sense the SUPI of the UE. Therefore, the AUSF does not carry the SUPI of the UE in the message.

When the UE is authenticated by using the AMF, if the AUSF receives the SUCI, the SUPI needs to be carried in this step because the SUPI needs to be sent to the AMF.

For S421 to S424, refer to S219 to S222.

It should be noted that, in S423, the UE needs to generate an MSK that is the same as that in step S418. For a method for generating the MSK and storing the Kausf, refer to descriptions of step S418.

For S425, refer to descriptions of S215. A network element configured to perform a function of an authentication function entity is the AUSF. Similar to S215, in a possible implementation, if the authentication function entity determines that an NSWO mode is in use for access by the UE, the AUSF does not need to initiate a procedure from S425 to S427 after successfully authenticating the UE.

S426: The UDM stores an authentication state indicating that the UE uses non-3GPP for access.

The UDM records the UE authentication success state in the following two possible manners.

Manner 1: The UDM maintains only one entry for the UE.

In a possible case 1, if authentication has been performed between the AUSF and the UE before, the UDM overwrites, by using an AUSF ID used for current authentication, an AUSF ID stored after previous authentication succeeds. In this case, both the AUSF and the UE need to generate and store the Kausf. If non-NSWO authentication is used, an AUSF ID used for NSWO authentication can or cannot overwrite previous non-NSWO authentication. If NSWO authentication can overwrite the AUSF ID, a current general situation is complied with, that is, the UDM is required to store only Kausf corresponding to AUSF that is last authenticated.

For example, an entry maintained by the UDM is shown in Table 1.

**Table 1**

| | | | |
|---|---|---|---|
| UE ID = SUPI | NSWO authentication | Success | AUSF ID (where an existing AUSF ID is replaced with an AUSF ID used for NSWO authentication) |

In a possible case 2, the UDM records only an AUSF ID used during non-NSWO authentication. In this case, neither the AUSF nor the UE needs to generate the Kausf, or generate the Kausf but does not need to store the Kausf. In this case, it may also be understood that if NSWO authentication does not overwrite the AUSF ID, a UPU and steering of roaming (steering of roaming, SoR) process may occur only by using the AMF. Therefore, the UPU and the SoR may be required only after authentication passing through the AMF is performed. In other words, the NSWO authentication is irrelevant to the UPU and SoR because it does not pass through the AMF. Therefore, in this understanding, the AUSF ID used for NSWO authentication and the generated Kausf do not need to be used subsequently.

For example, an entry maintained by the UDM is shown in Table 2. With reference to the second column and the fourth column, it is indicated that authentication on the UE succeeds by using the NSWO; with reference to the third column and the fourth column, it is indicated that authentication on the UE succeeds by using the non-NSWO; and an AUSF ID in the fifth column is an AUSF ID recorded when the non-NSWO authentication succeeds.

**Table 2**

| | | | | |
|---|---|---|---|---|
| UE ID = SUPI | NSWO authentication | Non-NSWO authentication | Success | AUSF ID |

Manner 2: The UDM maintains two entries that authentication succeeds for the UE.

One entry recorded by the UDM is marked as WLAN authentication or NSWO authentication, and is used for distinguishing from a context generated from authentication performed on the UE and the AUSF by using the AMF. If the authentication has been performed on the UE and the AUSF by using the AMF before the UE uses the WLAN for access, and a security context Kausf is generated, the AUSF further records the other entry and marks the entry that the entry is authenticated by using the AMF. In this case, when the UDM initiates the SoR procedure or the UE parameter update (UE parameter update, UPU) procedure, the UDM needs to use the Kausf generated from authentication by using the AMF to protect parameters that need to be protected in the SoR and UPU procedures. When the UDM initiates ERP re-authentication in the NSWO scenario, the Kausf used in an authentication process in the NSWO access scenario is used. That is, the Kausf can be used in the ERP process.

For example, Table 3 shows two authentication success entries that are of same UE and that are maintained by the AUSF. The second column "NSWO authentication" and "non-NSWO authentication" are used for distinguishing whether authentication is performed on the AUSF accessed by using the AMF. The AUSF ID in the fourth column indicates which AUSF stores the Kausf. Therefore, a main purpose of the two solutions herein is to enable the UDM to determine an AUSF that should be used for communicating with the UE by using non-3GPP, so that a key that is used for protection can be determined. In this case, when the UDM initiates the SoR procedure or the UPU procedure, the UDM needs to protect, by using the Kausf stored in the AUSF corresponding to the AUSF ID in the non-NSWO authentication entry in Table 3, the parameters that need to be protected in the SoR procedure and the UPU procedure. When the UDM initiates the ERP re-authentication in the NSWO scenario, the Kausf used in the authentication process in the NSWO access scenario is used. The UDM uses the Kausf or EMSK stored in the AUSF corresponding to the AUSF ID in the NSWO authentication entry to perform the re-authentication procedure.

**Table 3**

| | | | |
|---|---|---|---|
| UE ID = SUPI | NSWO authentication | Success | AUSF ID |
| | Non-NSWO authentication | Success | AUSF ID |

It should be noted that in this embodiment of this application, an example in which the AUSF performs the authentication function is used for description. Therefore, an ID of the authentication server function entity recorded by the UDM is an AUSF ID. If the authentication server function entity is another network element, the ID of the authentication server function entity recorded by the UDM is an ID of the another network element. This is not limited in this application. For example, if the authentication server function entity is an AAA server, the ID recorded by the authentication server function entity is an AAA ID.

For S427, refer to descriptions of S217.

In this embodiment of this application, the NSWO scenario is applied to a 5G system, so that an application scope of the NSWO access manner is extended. In addition, the UDM is indicated to select an EAP-AKA' authentication method, so that an authentication procedure between the UE and a SGC in the NSWO scenario can be improved. In addition, in the NSWO scenario, when accessing the SGC by using a non-3GPP access technology, the terminal device may not pass through the AMF. This reduces load of the AMF and reduces overheads of deploying an architecture in which the UE accesses the SGC by using the non-3GPP technology. In addition, compared with a current authentication state stored in the UDM, only an authentication success state may be recorded, and the ID of the authentication server function entity is not recorded. This is easy to maintain, and a small quantity of network elements need to be changed, thereby facilitating quick commercial use. Alternatively, indication information indicating whether authentication is initiated in the NSWO manner may be added on a basis of binding the authentication success state to the authentication server function entity, so that the entry recorded by the UDM is clearer. In addition, the authentication server function entity is formed by the proxy and the AUSF, to reduce an exposure surface of the AUSF and further improve security performance. The root key used for communication between the UE and the network side is generated by being compatible with a current key architecture, to improve an authentication and key distribution mechanism, reduce development workload, and accelerate commercial use.

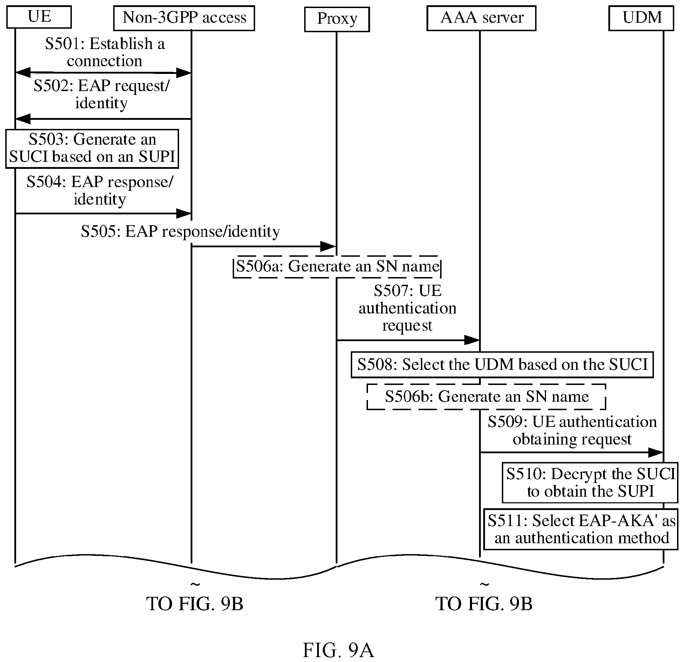

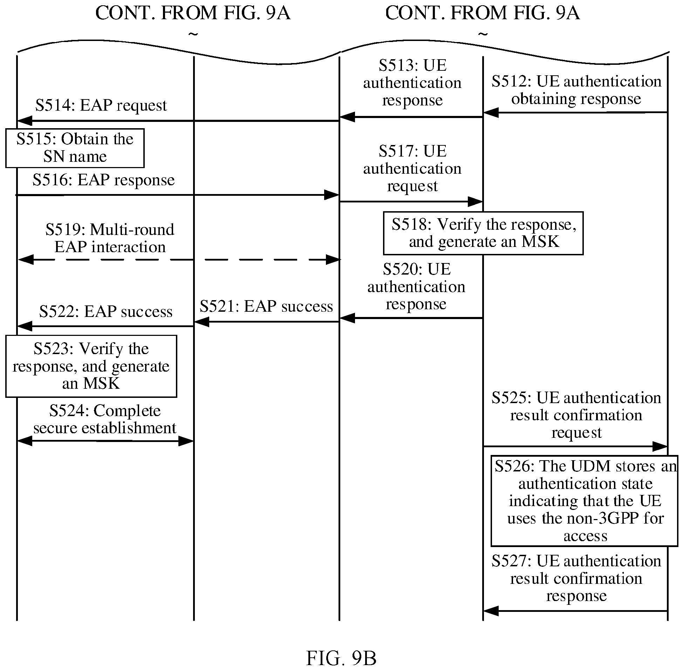

With reference to FIG. 9A and FIG. 9B, the following describes in detail a secure communication method 500 provided in this application. FIG. 9A and FIG. 9B are a schematic interaction diagram of the method 500 according to this application.

The method 500 differs from the method 400 in that:
(1) The AUSF in the method 400 is replaced with an AAA server, so that the key architecture in the method 400 also needs to be correspondingly changed. Because the AAA server does not need to generate Kasuf, the AAA server directly generates an MSK and an EMSK in step 18, and does not need to use most significant bits of the EMSK as the Kausf. The AAA server then sends the MSK to a Wi-Fi AP.
(2) In S526, if the UDM records, in Manner 2, the entry in which authentication on the UE succeeds, the entry needs to include an identifier of the AAA server, namely, an AAA ID, to determine, based on which AAA server authentication on the UE succeeds.

In this embodiment of this application, on a basis of beneficial effects of the method 400, the authentication can be performed by using the AAA server in an NSWO scenario, and the authentication can be performed by using the AUSF in a non-NSWO scenario. Natural separation is implemented by using different network elements, so that the two authentication manners are more independent and clear.

For all steps in the method 500 other than the foregoing differences, refer to related steps in the method 400.

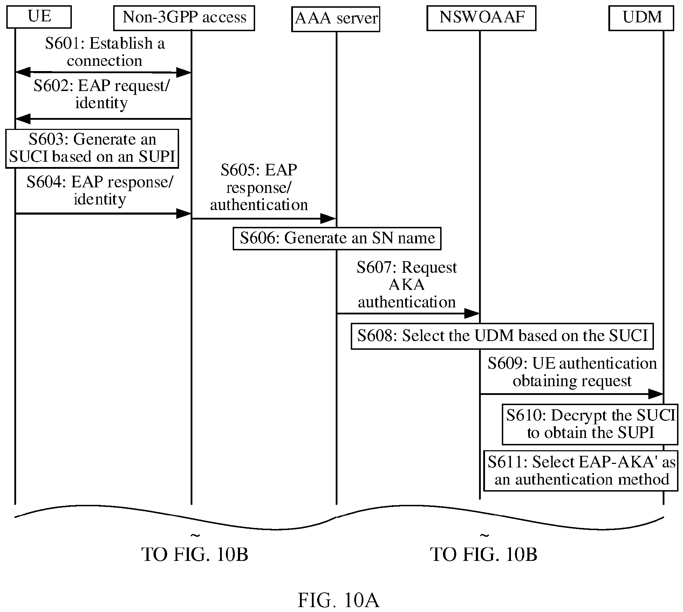

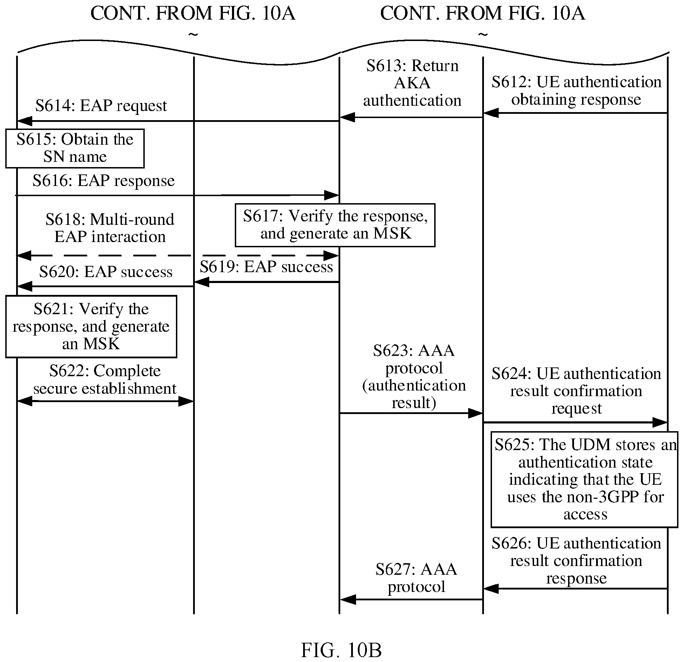

With reference to FIG. 10A and FIG. 10B, the following describes in detail a secure communication method 600 provided in this application. FIG. 10A and FIG. 10B are a schematic interaction diagram of the method 600 according to this application.

The method 600 differs from the method 500 in that:
(1) The proxy in the method 500 is replaced with an AAA server, the AUSF in the method 500 is replaced with a conversion network element between an AAA protocol and a service-based protocol, and the conversion network element has a non-seamless WLAN offloading authentication and authorization function (non-seamless WLAN Offload authentication and authorization function, NSWOAAF). The NSWOAAF is an authentication server function entity and is dedicated to processing an authentication procedure in an NSWO scenario. The authentication process and the key generation process in the method 600 may be sent to the AAA server. For details, refer to corresponding descriptions in the method 500. During the authentication, the NSWOAAF is used for protocol conversion. The NSWOAAF may be an independent function, network element, or entity, or may be a part of the AUSF.
(2) Message content in S607 is the same as that in S507, and a message name may be different. For example, the message name in S607 may be request AKA authentication (request AKA vector).
(3) Message content in S613 is the same as that in S513, and a message name may be different. For example, the message name in S613 may be return AKA authentication (return AKA vector).

In this embodiment of this application, the NSWO scenario is applied to a 5G system, so that an application scope of an NSWO access manner is extended. In addition, a UDM is indicated to select an EAP-AKA' authentication method, so that an authentication procedure between UE and a SGC in the NSWO scenario can be improved. In addition, in the NSWO scenario, when accessing the SGC by using a non-3GPP access technology, a terminal device may not pass through an AMF. This reduces load of the AMF and reduces overheads of deploying an architecture in which the UE accesses the SGC by using the non-3GPP technology.

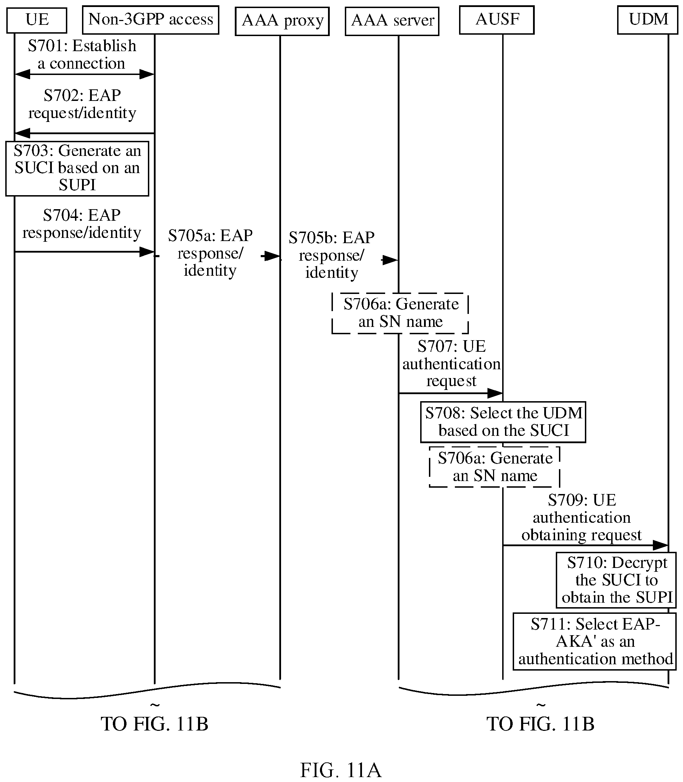

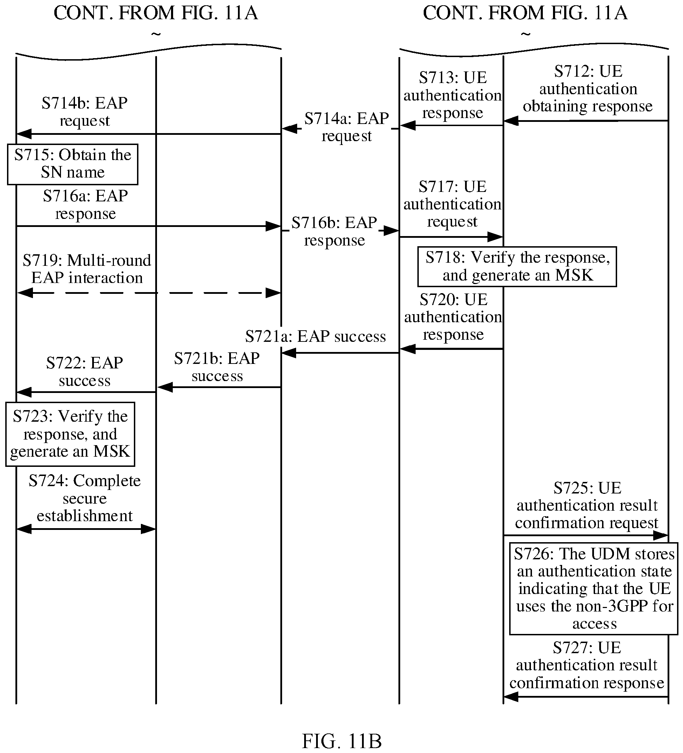

With reference to FIG. 11A and FIG. 11B, the following describes in detail a secure communication method 700 provided in this application. FIG. 11A and FIG. 11B are a schematic interaction diagram of the method 700 according to this application.

The method 700 differs from the method 400 in that:

The proxy in the method 400 is replaced with an AAA server. The AAA server is responsible for conversion between an AAA protocol and a service-based protocol, and adds an AAA proxy to an architecture. The AAA proxy is responsible for finding a 3 GPP AAA server when a Wi-Fi AP cannot directly find the AAA server. An AUSF is responsible for authentication and key derivation.

For information interaction in the method 700, reference may be made to similar steps in the method 400. Interaction steps between the AAA proxy and the AAA server are shown in FIG. 11A and FIG. 11B.

In this embodiment of this application, an NSWO scenario is applied to a 5G system, so that an application scope of the NSWO access manner is extended. In addition, a UDM is indicated to select an EAP-AKA' authentication method, so that an authentication procedure between UE and a SGC in the NSWO scenario can be improved. In addition, in the NSWO scenario, when accessing the SGC by using a non-3GPP access technology, a terminal device may not pass through an AMF. This reduces load of the AMF and reduces overheads of deploying an architecture in which the UE accesses the SGC by using the non-3GPP technology.

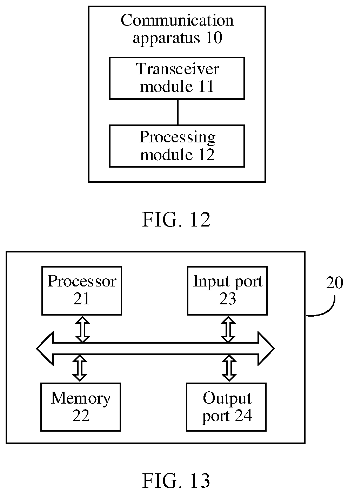

The foregoing describes in detail the method provided in embodiments of this application with reference to FIG. 1 to FIG. 11A and FIG. 11B. Apparatuses provided in embodiments of this application are described below in detail with reference to FIG. 12 and FIG. 13.

FIG. 12 is a schematic block diagram of a communication apparatus for secure communication according to an embodiment of this application. As shown in FIG. 12, a communication apparatus 10 may include a transceiver module 11 and a processing module 12.

The transceiver module 11 may be configured to receive information sent by another apparatus, and may be further configured to send information to another apparatus. For example, the transceiver module 11 receives a first message or sends first indication information. The processing module 12 may be configured to: perform content processing of the apparatus, for example, generate the first indication information based on the first message.

In a possible design, the communication apparatus 10 may correspond to the terminal device in the foregoing method embodiments.

Specifically, the communication apparatus 10 may correspond to the terminal device or the UE in any one of the method 100 to the method 700 according to embodiments of this application, and the communication apparatus 10 may include a module configured to perform an operation performed by the terminal device in a corresponding method. In addition, units in the communication apparatus 10 are separately configured to implement operations performed by the terminal device in corresponding methods.

For example, when the communication apparatus 10 corresponds to the terminal device in the method 100, the transceiver module 11 is configured to perform steps S101 and S103, and the processing module 12 is configured to perform S102.

For example, when the communication apparatus 10 corresponds to the UE in the method 200, the transceiver module 11 is configured to perform steps S201, S202, S204, S211, S213, S218, S220 and S222, and the processing module 12 is configured to perform S203, S212, and S221.

For example, when the communication apparatus 10 corresponds to the UE in the method 300, the transceiver module 11 is configured to perform steps S301, S302, S304, S311, S313, S318, S320 and S322, and the processing module 12 is configured to perform S303, S312, and S321.

For example, when the communication apparatus 10 corresponds to the UE in the method 400, the transceiver module 11 is configured to perform steps S401, S402, S404, S414, S416, S419, S422 and S424, and the processing module 12 is configured to perform S403, S415, and S423.

For example, when the communication apparatus 10 corresponds to the UE in the method 500, the transceiver module 11 is configured to perform steps S501, S502, S504, S514, S516, S519, S522 and S524, and the processing module 12 is configured to perform S503, S515, and S523.

For example, when the communication apparatus 10 corresponds to the UE in the method 600, the transceiver module 11 is configured to perform steps S601, S602, S604, S614, S616, S619, S622 and S624, and the processing module 12 is configured to perform S603, S615, and S623.

For example, when the communication apparatus 10 corresponds to the UE in the method 700, the transceiver module 11 is configured to perform steps S701, S702, S704, S714, S716, S719, S722 and S724, and the processing module 12 is configured to perform S703, S715, and S723.

Specifically, in a possible embodiment, the transceiver module 11 is configured to receive a message from a wireless access point; the processing module 12 is configured to generate indication information based on the message, where the indication information indicates that the terminal device is in a non-seamless wireless local area network offloading NSWO scenario; and the transceiver module is further configured to send the indication information.

The processing module 12 is further configured to: determine, based on the message, to access a network in an NSWO manner.

The indication information is a subscription concealed identifier SUCI in a network access identifier NAI format, or a field in a subscription concealed identifier SUCI.

The processing module 12 is further configured to generate a master session key, where the master session key is used for generating a key used for communication between the terminal device and the network, and the network is a network accessed by the terminal device in the NSWO manner.

The transceiver module 11 is further specifically configured to send the indication information to a unified data management entity, an authentication server function entity, or the wireless access point.

In another possible design, the communication apparatus 10 may correspond to the unified data management entity or the UDM in the foregoing method embodiment.

Specifically, the communication apparatus 10 may correspond to the unified data management entity or the UDM in any one of the method 100 to the method 700 according to embodiments of this application. The communication apparatus 10 may include a module configured to perform an operation performed by the unified data management entity or the UDM in a corresponding method. In addition, units in the communication apparatus 10 are separately configured to implement operations performed by the unified data management entity or the UDM in corresponding methods.

For example, when the communication apparatus 10 corresponds to the unified data management entity in the method 100, the transceiver module 11 is configured to perform step S106, and the processing module 12 is configured to perform step S107.

For example, when the communication apparatus 10 corresponds to the UDM in the method 200, the transceiver module 11 is configured to perform steps S207, S210, S215, and S217, and the processing module 12 is configured to perform steps S208, S209, and S216.

For example, when the communication apparatus 10 corresponds to the UDM in the method 300, the transceiver module 11 is configured to perform steps S307, S310, S315, and S317, and the processing module 12 is configured to perform steps S308, S309, and S316.

For example, when the communication apparatus 10 corresponds to the UDM in the method 400, the transceiver module 11 is configured to perform steps S409, S412, S425, and S427, and the processing module 12 is configured to perform steps S410, S411, and S426.

For example, when the communication apparatus 10 corresponds to the UDM in the method 500, the transceiver module 11 is configured to perform steps S509, S512, S525, and S527, and the processing module 12 is configured to perform steps S510, S511, and S526.

For example, when the communication apparatus 10 corresponds to the UDM in the method 600, the transceiver module 11 is configured to perform steps S609, S612, S624, and S626, and the processing module 12 is configured to perform steps S610, S611, and S625.

For example, when the communication apparatus 10 corresponds to the UDM in the method 700, the transceiver module 11 is configured to perform steps S709, S712, S725, and S727, and the processing module 12 is configured to perform steps S710, S711, and S726.

Specifically, in a possible embodiment, the transceiver module 11 is configured to receive indication information from an authentication server function entity; and the processing module 12 is configured to select extensible authentication protocol-authentication and key agreement EAP-AKA' from at least two authentication manners based on the indication information, to perform authentication with the terminal device.

The indication information is a subscription concealed identifier SUCI in a network access identifier NAI format, or a field in a subscription concealed identifier SUCI.

The indication information includes any one or more of the following: an identifier of the authentication server function entity, an identifier of a network in which the terminal device is located, access technology type indication information, or access method indication information. Access type indication information indicates an access network type, and the access method indication information indicates a feature of an access technology used by the terminal device.

The processing module 12 is further configured to store information indicating that the terminal device accesses the network in a non-seamless wireless local area network offloading NSWO manner; or the processing module 12 is further configured to store information indicating that the terminal device accesses the network in an NSWO manner, and the identifier of the authentication server function entity.

The information indicating that the terminal device accesses the network in the non-seamless wireless local area network offloading NSWO manner is used in an extensible authentication protocol EAP re-authentication procedure.

In another possible design, the communication apparatus 10 may correspond to the authentication server entity, the AUSF, the proxy, the AAA server, or the NSWOAAF in the foregoing method embodiments.

Specifically, the communication apparatus 10 may correspond to the authentication server entity, the AUSF, the proxy, the AAA server, or the NSWOAAF in any one of the method 100 to the method 700 according to embodiments of this application. The communication apparatus 10 may include a module configured to perform an operation performed by the authentication server entity, the AUSF, the proxy, the AAA server, or the NSWOAAF in a corresponding method, units in the communication apparatus 10 are separately configured to implement operations performed by the authentication server entity, the AUSF, the proxy, the AAA server, or the NSWOAAF in corresponding methods.

For example, when the communication apparatus 10 corresponds to the authentication server function entity in the method 100, the transceiver module 11 is configured to perform steps S103, S104, and S106, and the processing module 12 is configured to perform step S105.

For example, when the communication apparatus 10 corresponds to the authentication server function entity in the method 200, the transceiver module 11 is configured to perform steps S204, S207, S210, S211, S213, S215, S217, S218 and S219, and the processing module 12 is configured to perform steps S205, S206, and S214.

For example, when the communication apparatus 10 corresponds to the authentication server function entity in the method 300, the transceiver module 11 is configured to perform steps S304, S307, S310, S311, S313, S315, S317, S318 and S319, and the processing module 12 is configured to perform steps S305, S306, and S314.

For example, when the communication apparatus 10 corresponds to the AUSF in the method 400, the transceiver module 11 is configured to perform steps S407, S409, S4122, S413, S417, S418, S420, S425 and S427, and the processing module 12 is configured to perform steps S408, S406b, and S418.

For example, when the communication apparatus 10 corresponds to the AAA server in the method 500, the transceiver module 11 is configured to perform steps S507, S509, S512, S513, S517, S520, S525 and S527, and the processing module 12 is configured to perform steps S508, S506b, and S518.

For example, when the communication apparatus 10 corresponds to the AAA server in the method 600, the transceiver module 11 is configured to perform steps S502 and S504, and the processing module 12 is configured to perform steps S606 and S617.

For example, when the communication apparatus 10 corresponds to the AUSF in the method 700, the transceiver module 11 is configured to perform steps S707, S709, S701, S713, S717, S720, S725 and S727, and the processing module 12 is configured to perform steps S708, S706b, and S718.

Specifically, in a possible embodiment, the transceiver module 11 is configured to receive a message from a wireless access point; the processing module 12 is configured to generate indication information based on the message, where the indication information indicates a unified data management entity to select extensible authentication protocol-authentication and key agreement EAP-AKA' to perform authentication with a terminal device; and the transceiver module 11 is further configured to send the indication information to the unified data management entity.

The indication information includes any one or more of the following: an identifier of the authentication server function entity, an identifier of a network in which the terminal device is located, access technology type indication information, or access method indication information, where access type indication information indicates an access network type, and the access method indication information indicates a feature of an access technology used by the terminal device.

The processing module 12 is further configured to: determine, based on the message, that the terminal device accesses the network in an NSWO manner.

The processing module 12 is further configured to generate a master session key, where the master session key is used for generating a key used for communication between the terminal device and the network. The transceiver module is further configured to send the master session key to the wireless access point.

FIG. 13 is a schematic diagram of a secure communication apparatus 20 according to an embodiment of this application.

In a possible design, the apparatus 20 may be a unified data management entity, or may be a chip, a chip system, or the like located on a unified data management entity.

In a possible design, the apparatus 20 may be an authentication server function entity, or may be a chip, a chip system, or the like located on an authentication server function entity.

In a possible design, the apparatus 20 may be a terminal device, including various handheld devices, in-vehicle devices, wearable devices, or computing devices that have a wireless communication function, or other processing devices connected to a wireless modem, and various forms of terminals, mobile stations, terminals, user equipment, soft terminals, or the like, or may be a chip, a chip system, or the like located on a terminal device.

The apparatus 20 may include a processor 21 (that is, an example of a processing module) and a memory 22. The memory 22 is configured to store instructions, and the processor 21 is configured to: execute the instructions stored in the memory 22, so that the apparatus 20 implements the steps performed by the devices in the foregoing possible designs in the methods corresponding to FIG. 4 to FIG. 11A and FIG. 11B.

Further, the apparatus 20 may further include an input port 23 (that is, an example of a transceiver module) and an output port 24 (that is, another example of the transceiver module). Further, the processor 21, the memory 22, the input port 23, and the output port 24 may communicate with each other through an internal connection channel, to transmit a control signal and/or a data signal. The memory 22 is configured to store a computer program. The processor 21 may be configured to: invoke the computer program from the memory 22 and run the computer program, to control the input port 23 to receive the signal, and control the output port 24 to send the signal, to complete the steps of the terminal device, the radio access network device, the UE, or the base station in the foregoing method. The memory 22 may be integrated into the processor 21, or the memory 22 and the processor 21 may be separately disposed.

Optionally, if the packet transmission apparatus 20 is a communication device, the input port 23 is a receiver, and the output port 24 is a transmitter, where the receiver and the transmitter may be a same physical entity or different physical entities, when the receiver and the transmitter are the same physical entity, the receiver and the transmitter may be collectively referred to as a transceiver.

Optionally, if the apparatus 20 is a chip or a circuit, the input port 23 is an input interface, and the output port 24 is an output interface.

In an implementation, functions of the input port 23 and the output port 34 may be implemented by using a transceiver circuit or a special-purpose transceiver chip. The processor 21 may be implemented by using a dedicated processing chip, a processing circuit, a processor, or a general-purpose chip.

In another implementation, it may be considered that the device provided in this embodiment of this application is implemented by using a general-purpose computer. To be specific, program code that is used for implementing functions of the processor 21, the input port 23, and the output port 24 is stored in the memory 22, and a general-purpose processor implements the functions of the processor 21, the input port 23, and the output port 24 by executing the code in the memory 22.

Modules or units in the apparatus 20 may be configured to perform actions or processing processes performed by a random access device (for example, a terminal device) in the foregoing method. To avoid repetition, detailed descriptions thereof are omitted herein.

For concepts, explanations, detailed descriptions, and other steps of the apparatus 20 that are related to the technical solutions provided in embodiments of this application, refer to descriptions of the content in the foregoing methods or other embodiments. Details are not described herein again.

It should be understood that, the processor in embodiments of this application may be a central processing unit (CPU, central processing unit), or may be another general-purpose processor, a digital signal processor (DSP, digital signal processor), an application-specific integrated circuit (application specific integrated circuit, ASIC), a field programmable gate array (field programmable gate array, FPGA), or another programmable logic device, discrete gate or transistor logic device, discrete hardware component, or the like. The general-purpose processor may be a microprocessor, or the processor may be any conventional processor or the like.

An embodiment of this application further provides a computer-readable storage medium, where the computer-readable storage medium stores computer instructions used for implementing the method performed by the authentication server function entity, the unified data management entity, or the terminal device in the foregoing method embodiments.

For example, when the computer program is executed by a computer, the computer is enabled to implement the method performed by the authentication server function entity, the unified data management entity, or the terminal device in the foregoing method embodiments.

An embodiment of this application further provides a computer-readable storage medium, where the computer-readable storage medium stores computer instructions used for implementing the method performed by the authentication server function entity, the unified data management entity, or the terminal device in the foregoing method embodiments.

For example, when the computer program is executed by a computer, the computer is enabled to implement the method performed by the authentication server function entity, the unified data management entity, or the terminal device in the foregoing method embodiments.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example and not limitation, RAMs in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented using software, hardware, firmware, or any combination thereof. When software is used to implement the embodiments, the foregoing embodiments may be implemented completely or partially in a form of a computer program product. The computer program product includes one or more computer instructions or computer programs. When the computer instructions or the computer programs are loaded and executed on a computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a DVD), or a semiconductor medium. The semiconductor medium may be a solid-state drive.

It should be understood that the term "and/or" in this specification describes only an association relationship between associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application. It may be clearly understood by a person skilled in the art that, for the purpose of convenient and brief description, for a detailed working process of the foregoing system, apparatus, and unit, refer to a corresponding process in the foregoing method embodiments. Details are not described herein again. In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments. In addition, functional units in embodiments of this application may be integrated into one processing unit, or each of the units may exist alone physically, or two or more units may be integrated into one unit. When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk drive, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A secure communication method, comprising:
establishing, by a terminal device, a connection with a wireless access point;
receiving, by the terminal device, an extensible authentication protocol EAP request or authentication message from the wireless access point;
generating, by the terminal device, a subscription concealed identifier SUCI in a network access identifier NAI format by using an international mobile subscriber identity IMSI, wherein the SUCI comprises indication information, and the indication information indicates an access manner of non-seamless wireless local area network offloading NSWO; and
sending, by the terminal device, an EAP response or identity message to the wireless access point, wherein the EAP response or the identity message comprises the SUCI.

2. The method according to claim 1, wherein the establishing, by a terminal device, a connection with a wireless access point comprises:
in a process of establishing the connection between the terminal device and the wireless access point, receiving, by the terminal device, a message from the wireless access point, and determining that the terminal device accesses a network in the NSWO manner.

3. The method according to claim 2, wherein the determining, by the terminal device, that the terminal device accesses a network in the NSWO manner comprises:
determining, by the terminal device based on a locally stored service set identifier SSID list, that the NSWO manner is used for an SSID in the list.

4. The method according to any one of claims 1 to 3, wherein the indication information is in a domain name example part of the NAI format.

5. The method according to any one of claims 1 to 4, further comprising:
verifying, by the terminal device, authenticity of a network side;
generating, by the terminal device, a master session key MSK after the verification succeeds; and
accessing, by the terminal device, the network in the NSWO manner, wherein an intermediate key Kausf is not generated.

6. The method according to any one of claims 1 to 5, wherein the terminal device ignores a locally stored security context and 5G globally unique temporary identity 5G-GUTI when generating the SUCI.

7. A secure communication method, comprising:
receiving, by a proxy of an authentication server function entity, a message from a wireless access point;
generating, by the proxy, a service network name, wherein the service network name comprises an identifier of an access network and access method indication information, the access network is a network where the wireless access point is located, and the access method indication information indicates that a network access manner used by a terminal device is non-seamless wireless local area network offloading NSWO; and
sending, by the proxy, a terminal device authentication request message to the authentication server function entity, wherein the terminal device authentication request message comprises a subscription concealed identifier SUCI of the terminal device and the service network name.

8. The method according to claim 7, wherein the method further comprises:
receiving, by the proxy, a terminal device authentication response message from the authentication server function entity.

9. The method according to claim 7 or 8, wherein the method further comprises:
forwarding, by the proxy, an authentication vector and the service network name to the terminal device by using an extensible authentication protocol EAP request message; and
receiving, by the proxy, an EAP response message from the terminal device.

10. A secure communication method, comprising:
receiving, by an authentication server function entity, an extensible authentication protocol EAP response or authentication and key agreement AKA' invite message from a terminal device;
verifying, by the authentication server function entity, authenticity of the terminal device, and generating a master session key MSK;
if the authentication server function entity determines that the terminal device accesses a network in a manner of non-seamless wireless local area network offloading NSWO, an intermediate key Kausf is not generated;
sending, by the authentication server function entity, an EAP success message to the terminal device through a wireless access point; and
sending, by the authentication server function entity, the MSK to the wireless access point.

11. The method according to claim 10, wherein the method further comprises:
sending, by the authentication server function entity, a terminal device authentication result confirmation request message to a unified data management entity; and
receiving, by the authentication server function entity, a terminal device authentication result confirmation response message from the unified data management entity.

12. The method according to claim 10 or 11, wherein the method further comprises:
performing, by the authentication server function entity, optional multi-round EAP interaction with the terminal device.

13. A secure communication apparatus, comprising:
at least one processor; and
a memory, coupled to the at least one processor and configured to: store instructions for execution by the at least one processor to instruct the at least one processor to:
establish a connection with a wireless access point;
receive an extensible authentication protocol EAP request or authentication message from the wireless access point;
generate a subscription concealed identifier SUCI in a network access identifier NAI format by using an international mobile subscriber identity IMSI, wherein the SUCI comprises indication information, and the indication information indicates an access manner of non-seamless wireless local area network offloading NSWO; and
send an EAP response or identity message to the wireless access point, wherein the EAP response or the identity message comprises the SUCI.

14. The apparatus according to claim 13, wherein the instructions further instruct the at least one processor to:
in a process of establishing the connection with the wireless access point, receive a message from the wireless access point, and determine that the apparatus accesses a network in the NSWO manner.

15. The apparatus according to claim 14, wherein the instructions further instruct the at least one processor to:
determine, based on a locally stored service set identifier SSID list, that the NSWO manner is used for an SSID in the list.

16. The apparatus according to any one of claims 13 to 15, wherein the indication information is in a domain name example part of the NAI format.

17. The apparatus according to any one of claims 13 to 16, wherein the instructions further instruct the at least one processor to:
verify authenticity of a network side;
generate a master session key MSK after the verification succeeds; and
access the network in the NSWO manner, wherein an intermediate key Kausf is not generated.

18. The apparatus according to any one of claims 13 to 17, wherein the at least one processor ignores a locally stored security context and 5G globally unique temporary identity 5G-GUTI when generating the SUCI.

19. A secure communication apparatus, comprising:
at least one processor; and
a memory, coupled to the at least one processor and configured to: store instructions for execution by the at least one processor to instruct the at least one processor to:
receive a message from a wireless access point;
generate a service network name, wherein the service network name comprises an identifier of an access network and access method indication information, the access network is a network where the wireless access point is located, and the access method indication information indicates that a network access manner used by a terminal device is non-seamless wireless local area network offloading NSWO; and
send a terminal device authentication request message to an authentication server function entity, wherein the terminal device authentication request message comprises a subscription concealed identifier SUCI of the terminal device and the service network name.

20. The apparatus according to claim 19, wherein the instructions further instruct the at least one processor to:
receive a terminal device authentication response message from the authentication server function entity.

21. The apparatus according to claim 19 or 20, wherein the instructions further instruct the at least one processor to:
forward an authentication vector and the service network name to the terminal device by using an extensible authentication protocol EAP request message; and
receive an EAP response message from the terminal device.

22. A secure communication apparatus, comprising:
at least one processor; and
a memory, coupled to the at least one processor and configured to: store instructions for execution by the at least one processor to instruct the at least one processor to:
receive an extensible authentication protocol EAP response or authentication and key agreement AKA' invite message from a terminal device;
verify authenticity of the terminal device, and generate a master session key MSK;
if determining that the terminal device accesses a network in a manner of non-seamless wireless local area network offloading NSWO, an intermediate key Kausf is not generated;
send an EAP success message to the terminal device through a wireless access point; and
send the MSK to the wireless access point.

23. The apparatus according to claim 22, wherein the instructions further instruct the at least one processor to:
send a terminal device authentication result confirmation request message to a unified data management entity; and
receive a terminal device authentication result confirmation response message from the unified data management entity.

24. The apparatus according to claim 22 or 23, wherein the instructions further instruct the at least one processor to:
perform optional multi-round EAP interaction with the terminal device.

25. A secure communication method, comprising:
receiving, by a proxy of an authentication server function entity, a message from a wireless access point;
generating, by the proxy, a service network name, wherein the service network name comprises an identifier of an access network and access method indication information, the access network is a network where the wireless access point is located, and the access method indication information indicates that a network access manner used by a terminal device is non-seamless wireless local area network offloading NSWO;
sending, by the proxy, a terminal device authentication request message to the authentication server function entity, wherein the terminal device authentication request message comprises a subscription concealed identifier SUCI of the terminal device and the service network name; and
receiving, by the authentication server function entity, the terminal device authentication request message from the proxy.

26. The method according to claim 25, wherein the method further comprises:
receiving, by the proxy, a terminal device authentication response message from the authentication server function entity.

27. The method according to claim 25 or 26, wherein the method further comprises:
forwarding, by the proxy, an authentication vector and the service network name to the terminal device by using an extensible authentication protocol EAP request message; and
receiving, by the proxy, an EAP response message from the terminal device.

28. A secure communication method, comprising:
receiving, by an authentication server function entity, an extensible authentication protocol EAP response or authentication and key agreement AKA' invite message from a terminal device;
verifying, by the authentication server function entity, authenticity of the terminal device, and generating a master session key MSK;
if the authentication server function entity determines that the terminal device accesses a network in a manner of non-seamless wireless local area network offloading NSWO, an intermediate key Kausf is not generated;
sending, by the authentication server function entity, an EAP success message to the terminal device through a wireless access point;
sending, by the wireless access point, the EAP success message to the terminal device;
sending, by the authentication server function entity, the MSK to the wireless access point; and
receiving, by the wireless access point, the MSK.

29. The method according to claim 28, wherein the method further comprises:
sending, by the authentication server function entity, a terminal device authentication result confirmation request message to a unified data management entity; and
receiving, by the authentication server function entity, a terminal device authentication result confirmation response message from the unified data management entity.

30. The method according to claim 28 or 29, wherein the method further comprises:
performing, by the authentication server function entity, optional multi-round EAP interaction with the terminal device.

31. A secure communication system, comprising the apparatus according to any one of claims 19 to 21 and the apparatus according to any one of claims 22 to 24.

32. A computer-readable storage medium, wherein the storage medium stores a computer program or instructions, and when the computer program or the instructions are executed by a communication apparatus, the method according to any one of claims 1 to 12 is implemented.
